# EUROPEAN PATENT SPECIFICATION

(11) **EP 3 079 430 B1**
(45) Date of publication and mention of the grant of the patent: **20.03.2019**
(21) Application number: 13900677.9
(22) Date of filing: 30.12.2013
(51) Int. Cl.: H04W 74/08, H04L 5/00

(54) **METHOD AND DEVICE FOR ACTIVATING SECONDARY CELL, COMMUNICATION SYSTEM, BASE STATION, AND USER EQUIPMENT**
VERFAHREN UND VORRICHTUNG ZUR AKTIVIERUNG EINER SEKUNDÄRZELLE, KOMMUNIKATIONSSYSTEM, BASISSTATION UND BENUTZERGERÄT
PROCÉDÉ ET DISPOSITIF POUR ACTIVER UNE CELLULE SECONDAIRE, SYSTÈME DE COMMUNICATION, STATION DE BASE ET ÉQUIPEMENT UTILISATEUR

(43) Date of publication of application: 12.10.2016
(73) Proprietor: Huawei Technologies Co., Ltd., Longgang District Shenzhen, Guangdong 518129 (CN)
(72) Inventor: LIU, Wenji, Shenzhen Guangdong 518129 (CN); ZENG, Qinghai, Shenzhen Guangdong 518129 (CN); HUANG, Qufang, Shenzhen Guangdong 518129 (CN)
(74) Representative: Pfenning, Meinig & Partner mbB
(86) International application number: PCT/CN2013/090855
(87) International publication number: WO 2015/100527

(56) References cited:
- WO-A1-2013/029552
- WO-A1-2013/117239
- WO-A1-2013/157537
- WO-A1-2013/184670
- WO-A2-2012/096502
- CN-A- 102 300 203
- CN-A- 102 958 045
- US-A1- 2013 201 834

## Description

### TECHNICAL FIELD

The present invention relates to the field of communications technologies, and in particular, to a secondary cell activation method and apparatus, a communications system, a base station, and user equipment.

### BACKGROUND

In an existing Long Term Evolution (Long Term Evolution, LTE) system, to meet relatively large uplink and downlink transmission bandwidth, a carrier aggregation (Carrier Aggregation, CA) solution is proposed, that is, at least two component carriers (Component Carrier, CC) are aggregated together to support larger transmission bandwidth (a maximum of 100 MHz), where maximum bandwidth of each component carrier may be 20 MHz.

Each component carrier corresponds to an independent cell (cell). Carrier aggregation-capable user equipment may be connected to one primary cell (PCell) and at least one secondary cell (SCell). A primary cell and all secondary cells of user equipment constitute a serving cell (serving cell) set of the user equipment. A base station of the primary cell may configure a secondary cell for user equipment within a coverage area of the primary cell, so as to provide additional radio resources for communication of the user equipment.

In the prior art, after configuring the secondary cell, the base station of the primary cell further needs to activate the secondary cell, so that user equipment can perform communication by using the additional resources provided by the secondary cell. Specifically, the base station of the primary cell needs to determine, according to a measurement report reported by the user equipment, which secondary cell needs to be activated, send information about the determined secondary cell to the user equipment, and then send other information for communication in the secondary cell to the user equipment, causing a relatively long delay in this process.

US 2013/0201834 A1 provides techniques for controlling downlink data transfer during carrier aggregation, in particular controlling a secondary comp9onent carrier downlink during carrier aggregation. The method includes detecting, by a mobile entity, an event indicating a resource constraint related to a data transmission from a base station to the mobile entity and controlling the data transmission by signaling a status of the second component carrier to the base station.

WO 2013/157537A1, also published as EP 2 849 490 A1, discloses a mobile station including a reception unit and a management unit. The reception unit is configured, when carrier aggregation communication is performed by a primary cell and another cell, to receive a message instructing switching of the primary cell to a macrocell; and the management unit is configured, when said message further instructs setting the other cell as the secondary cell, to set the other cell as the secondary cell in an activated state.

WO 2013/184670 A1 provides a method for managing radio frequency chains in a carrier aggregation capable wireless device, including using two radio frequency chains associated with a first and second component carrier, respectively.

### SUMMARY

The subject matter of the present invention is defined by the appended claims. Further embodiments not covered by the claims are provided for background information to promote a deeper understanding of the claims.

Embodiments of the present invention provide a secondary cell activation method and apparatus, a communications system, a base station, and user equipment, which reduces time required for activating a secondary cell.

A first aspect of the embodiments of the present invention provides a secondary cell activation apparatus, including:
a configuration sending unit, configured to send configuration information of all of one or more secondary cells to user equipment, where the configuration information includes configuration information of an uplink control channel of the secondary cell, and the configuration information of the uplink control channel of the secondary cell is used by the user equipment to send a Media Access Control control element MAC CE on the corresponding uplink control channel to activate the secondary cell; and
a data sending unit, configured to send downlink data for the user equipment to a base station of the secondary cell, so that the base station of the secondary cell forwards the downlink data to the user equipment after the secondary cell is activated.

In a first possible implementation manner of the first aspect of the embodiments of the present invention,
the configuration sending unit is specifically configured to: add the configuration information of the uplink control channel of the secondary cell and other configuration information of the secondary cell into a same radio resource control RRC message, and send the RRC message to the user equipment; or add the configuration information of the uplink control channel of the secondary cell and other configuration information of the secondary cell into different radio resource control RRC messages, and send the RRC messages to the user equipment, where
configuration information of uplink control channels of all the secondary cells is the same or different; and/or
the configuration information of the uplink control channels of all the secondary cells and configuration information of an uplink control channel of a primary cell are the same or different.

With reference to the first aspect or the first possible implementation manner of the first aspect of the embodiments of the present invention, in a second possible implementation manner of the first aspect of the embodiments of the present invention, the apparatus further includes:
a cell determining unit, configured to: determine the one or more secondary cells according to a measurement report reported by the user equipment, and instruct the configuration sending unit to specifically send the configuration information of the determined one or more secondary cells to the user equipment, where
the configuration sending unit is specifically configured to send the configuration information of the one or more secondary cells determined by the cell determining unit to the user equipment.

With reference to the first aspect or either of the first and the second possible implementation manner of the first aspect of the embodiments of the present invention, in a third possible implementation manner of the first aspect of the embodiments of the present invention,
the data sending unit is specifically configured to send the downlink data for the user equipment to base stations of all the secondary cells.

With reference to the first aspect or either of the first and the second possible implementation manner of the first aspect of the embodiments of the present invention, in a fourth possible implementation manner of the first aspect of the embodiments of the present invention,
the data sending unit is specifically configured to: if notification information sent by a base station of a second secondary cell is received, send the downlink data for the user equipment to the base station of the second secondary cell, where the notification information is used to indicate that the user equipment falls within the second secondary cell.

With reference to the fourth possible implementation manner of the first aspect of the embodiments of the present invention, in a fifth possible implementation manner of the first aspect of the embodiments of the present invention, the apparatus further includes:
a cell activation and sending unit, configured to: before the data sending unit sends the downlink data for the user equipment to the base station of the second secondary cell, activate a first secondary cell in the one or more secondary cells, and send the downlink data for the user equipment to a base station of the first secondary cell, where
the data sending unit is further configured to: when sending the downlink data for the user equipment to the base station of the determined second secondary cell, instruct the cell activation and sending unit to stop sending the downlink data for the user equipment to the base station of the first secondary cell.

With reference to the fifth possible implementation manner of the first aspect of the embodiments of the present invention, in a sixth possible implementation manner of the first aspect of the embodiments of the present invention,
the cell activation and sending unit is specifically configured to send a secondary cell list to the user equipment, where the secondary cell list is used by the user equipment to use a secondary cell that appears first in the secondary cell list as the first secondary cell for activation.

With reference to the first aspect or either of the first and the second possible implementation manner of the first aspect of the embodiments of the present invention, in a seventh possible implementation manner of the first aspect of the embodiments of the present invention, the apparatus further includes:
an indication receiving unit, configured to receive signal indication information that is of the secondary cell and is sent by the user equipment, where the signal indication information is used to indicate quality information of a signal received from the secondary cell by the user equipment; and
an activation determining unit, configured to determine, according to the signal indication information that is of the secondary cell and is received by the indication receiving unit, a third secondary cell that needs to be activated, where
the data sending unit is specifically configured to send the downlink data for the user equipment to a base station of the third secondary cell determined by the activation determining unit.

With reference to the seventh possible implementation manner of the first aspect of the embodiments of the present invention, in an eighth possible implementation manner of the first aspect of the embodiments of the present invention, the apparatus further includes:
an activation unit, configured to send activation indication information to the base station of the third secondary cell determined by the activation determining unit, where the activation indication information is used to instruct to activate the determined third secondary cell, where
the activation unit is further configured to instruct the user equipment to activate the third secondary cell.

With reference to the seventh or the eighth possible implementation manner of the first aspect of the embodiments of the present invention, in a ninth possible implementation manner of the first aspect of the embodiments of the present invention, the apparatus further includes:
an activation and sending unit, configured to: before the data sending unit sends the downlink data for the user equipment to the base station of the third secondary cell, activate a fourth secondary cell in the one or more secondary cells, and send the downlink data for the user equipment to a base station of the fourth secondary cell, where
the data sending unit is further configured to: when sending the downlink data for the user equipment to the base station of the determined third secondary cell, instruct the activation and sending unit to stop sending the downlink data for the user equipment to the base station of the fourth secondary cell.

With reference to the first aspect or any one of the first to the ninth possible implementation manners of the first aspect of the embodiments of the present invention, in a tenth possible implementation manner of the first aspect of the embodiments of the present invention, the apparatus further includes:
a resource sending unit, configured to send, to the base station of the secondary cell, resource configuration information for forwarding the downlink data by the secondary cell, where the resource configuration information is used by the base stations of all of the one or more secondary cells to synchronously send same downlink data to the user equipment.

A second aspect of the embodiments of the present invention provides a secondary cell activation apparatus, including:
a downlink receiving unit, configured to receive downlink data that is for user equipment and is sent by a base station of a primary cell in which the user equipment is located;
a determining unit, configured to determine to activate a secondary cell; and
a forwarding unit, configured to: after the determining unit determines to activate the secondary cell, forward the downlink data that is for the user equipment and is received by the downlink receiving unit to the user equipment.

In a first possible implementation manner of the second aspect of the embodiments of the present invention, the determining unit is specifically configured to: after the downlink receiving unit receives the downlink data for the user equipment, determine to activate the secondary cell; or is specifically configured to: after activation indication information sent by the base station of the primary cell in which the user equipment is located is received, determine to activate the secondary cell.

In a second possible implementation manner of the second aspect of the embodiments of the present invention, the apparatus further includes:
an information receiving unit, configured to receive a Media Access Control control element MAC CE sent by the user equipment on an uplink control channel, where configuration information of the uplink control channel is sent by the base station of the primary cell to the user equipment, where
the determining unit is further configured to: after the information receiving unit receives the MAC CE, determine to activate a base station of the secondary cell.

With reference to the second possible implementation manner of the second aspect of the embodiments of the present invention, in a third possible implementation manner of the second aspect of the embodiments of the present invention, the apparatus further includes:
a notification sending unit, configured to send notification information to the base station of the primary cell, where the notification information is used to indicate that the user equipment falls within the secondary cell.

With reference to the second aspect or any one of the first to the third possible implementation manners of the second aspect of the embodiments of the present invention, in a fourth possible implementation manner of the second aspect of the embodiments of the present invention, the apparatus further includes:
a resource receiving unit, configured to receive resource configuration information that is for forwarding the downlink data by the base station of the secondary cell and is sent by the base station of the primary cell, where
the forwarding unit is specifically configured to send same downlink data synchronously with a base station of other one or more secondary cells to the user equipment on a resource corresponding to the resource configuration information received by the resource receiving unit.

A third aspect of the embodiments of the present invention provides a secondary cell activation apparatus, including:
a configuration receiving unit, configured to receive configuration information that is of all of one or more secondary cells and is sent by a base station of a primary cell of user equipment, where the configuration information includes configuration information of an uplink control channel of the secondary cell;
an information sending unit, configured to send a Media Access Control control element MAC CE on the uplink control channel of the secondary cell according to the configuration information that is of the uplink control channel of the secondary cell and is received by the configuration receiving unit, so as to activate a secondary cell in which the user equipment is currently located; and
a data receiving unit, configured to receive downlink data sent by the base station of the primary cell by using a base station of the activated secondary cell.

In a first possible implementation manner of the third aspect of the embodiments of the present invention, the apparatus further includes:
a signal indication sending unit, configured to send signal indication information of the secondary cell, where the signal indication information is used to indicate signal quality information of the secondary cell, where
the information sending unit is configured to: determine a secondary cell with best signal quality indicated by the signal indication information sent by the signal indication sending unit as an activated secondary cell, and send the MAC CE on an uplink control channel of the determined activated secondary cell.

In a second possible implementation manner of the third aspect of the embodiments of the present invention,
the information sending unit is specifically configured to: determine a secondary cell with best signal quality as an activated secondary cell, and send the MAC CE on an uplink control channel of the determined activated secondary cell; or
the information sending unit is specifically configured to: when a secondary cell list sent by the base station of the primary cell is received, determine a secondary cell that appears first in the secondary cell list as an activated secondary cell, and send the MAC CE on an uplink control channel of the determined activated secondary cell.

A fourth aspect of the embodiments of the present invention provides a base station, including a processor, a transmitter, and a receiver, where
the transmitter is configured to: send configuration information of all of one or more secondary cells to user equipment, where the configuration information includes configuration information of an uplink control channel of the secondary cell, and the configuration information of the uplink control channel of the secondary cell is used by the user equipment to send a Media Access Control control element MAC CE on the corresponding uplink control channel to activate the secondary cell; and send downlink data for the user equipment to a base station of the secondary cell, so that the base station of the secondary cell forwards the downlink data to the user equipment after the secondary cell is activated.

In a first possible implementation manner of the fourth aspect of the embodiments of the present invention,
the receiver is further configured to receive a measurement report reported by the user equipment;
the processor is configured to: determine the one or more secondary cells according to the measurement report that is reported by the user equipment and is received by the receiver, and instruct the transmitter to send the configuration information of the determined one or more secondary cells to the user equipment; and
the transmitter is specifically configured to send the configuration information of the determined one or more secondary cells to the user equipment.

With reference to the fourth aspect or the first possible implementation manner of the fourth aspect of the embodiments of the present invention, in a second possible implementation manner of the fourth aspect of the embodiments of the present invention,
the transmitter is specifically configured to send the downlink data for the user equipment to base stations of all the secondary cells.

With reference to the fourth aspect or either of the first and the second possible implementation manner of the fourth aspect of the embodiments of the present invention, in a third possible implementation manner of the fourth aspect of the embodiments of the present invention,
the receiver is configured to receive notification information sent by a base station of a second secondary cell, where the notification information is used to indicate that the user equipment falls within the second secondary cell; and
the transmitter is specifically configured to: if the receiver receives the notification information sent by the base station of the second secondary cell, send the downlink data for the user equipment to the base station of the second secondary cell.

With reference to the third possible implementation manner of the fourth aspect of the embodiments of the present invention, in a fourth possible implementation manner of the fourth aspect of the embodiments of the present invention,
the processor is configured to: before the transmitter sends the downlink data for the user equipment to the base station of the second secondary cell, activate a first secondary cell in the one or more secondary cells, and instruct the transmitter to send the downlink data for the user equipment to a base station of the first secondary cell; and
the transmitter is further configured to: when sending the downlink data for the user equipment to the base station of the second secondary cell, stop sending the downlink data for the user equipment to the base station of the first secondary cell.

With reference to the fourth possible implementation manner of the fourth aspect of the embodiments of the present invention, in a fifth possible implementation manner of the fourth aspect of the embodiments of the present invention,
the processor is specifically configured to instruct the transmitter to send a secondary cell list to the user equipment, where the secondary cell list is used by the user equipment to use a secondary cell that appears first in the secondary cell list as the first secondary cell for activation.

With reference to the fourth aspect or either of the first and the second possible implementation manner of the fourth aspect of the embodiments of the present invention, in a sixth possible implementation manner of the fourth aspect of the embodiments of the present invention,
the receiver is configured to receive signal indication information that is of the secondary cell and is sent by the user equipment, where the signal indication information is used to indicate quality information of a signal received from the secondary cell by the user equipment;
the processor is configured to determine, according to the signal indication information of the secondary cell, a third secondary cell that needs to be activated; and
the transmitter is specifically configured to send the downlink data for the user equipment to a base station of the determined third secondary cell.

With reference to the sixth possible implementation manner of the fourth aspect of the embodiments of the present invention, in a seventh possible implementation manner of the fourth aspect of the embodiments of the present invention,
the transmitter is further configured to send activation indication information to the base station of the determined third secondary cell, where the activation indication information is used to instruct to activate the determined third secondary cell; and
the transmitter is further configured to instruct the user equipment to activate the third secondary cell.

With reference to the sixth and the seventh possible implementation manners of the fourth aspect of the embodiments of the present invention, in an eighth possible implementation manner of the fourth aspect of the embodiments of the present invention,
the processor is further configured to: before the transmitter sends the downlink data for the user equipment to the base station of the determined third secondary cell, activate a fourth secondary cell in the one or more secondary cells; and
the transmitter is further configured to: send the downlink data for the user equipment to a base station of the fourth secondary cell, and when sending the downlink data for the user equipment to the base station of the determined third secondary cell, stop sending the downlink data for the user equipment to the base station of the fourth secondary cell.

With reference to the fourth aspect or any one of the first to the eighth possible implementation manners of the fourth aspect of the embodiments of the present invention, in a ninth possible implementation manner of the fourth aspect of the embodiments of the present invention,
the transmitter is further configured to send, to the base station of the secondary cell, resource configuration information for forwarding the downlink data by the secondary cell, where the resource configuration information is used by the base stations of all of the one or more secondary cells to synchronously send same downlink data to the user equipment.

A fifth aspect of the embodiments of the present invention provides a base station, including a processor, a receiver, and a transmitter, where
the receiver is configured to receive downlink data that is for user equipment and is sent by a base station of a primary cell in which the user equipment is located;
the processor is configured to determine to activate a secondary cell; and
the transmitter is configured to: after the processor determines to activate the secondary cell, forward the downlink data that is for the user equipment and is received by the transmitter to the user equipment.

In a first possible implementation manner of the fifth aspect of the embodiments of the present invention,
the processor is specifically configured to: after the receiver receives the downlink data for the user equipment, determine to activate the secondary cell;
or
the processor is specifically configured to: after the receiver receives activation indication information sent by the base station of the primary cell in which the user equipment is located, determine to activate the secondary cell, where the receiver is further configured to receive the activation indication information sent by the base station of the primary cell in which the user equipment is located.

In a second possible implementation manner of the fifth aspect of the embodiments of the present invention,
the receiver is further configured to receive a Media Access Control control element MAC CE sent by the user equipment on an uplink control channel; and
the processor is further configured to: after the receiver receives the MAC CE, determine to activate a base station of the secondary cell, where configuration information of the uplink control channel is sent by the base station of the primary cell to the user equipment.

With reference to the second possible implementation manner of the fifth aspect of the embodiments of the present invention, in a third possible implementation manner of the fifth aspect of the embodiments of the present invention,
the transmitter is further configured to send notification information to the base station of the primary cell, where the notification information is used to indicate that the user equipment falls within the secondary cell.

With reference to the fifth aspect or any one of the first to the third possible implementation manners of the fifth aspect of the embodiments of the present invention, in a fourth possible implementation manner of the fifth aspect of the embodiments of the present invention,
the receiver is further configured to receive resource configuration information that is for forwarding the downlink data by the base station of the secondary cell and is sent by the base station of the primary cell; and
the transmitter is specifically configured to send same downlink data synchronously with a base station of other one or more secondary cells to the user equipment on a resource corresponding to the resource configuration information received by the receiver.

A sixth aspect of the embodiments of the present invention provides user equipment, including a processor, a transmitter, and a receiver, where
the receiver is configured to receive configuration information that is of all of one or more secondary cells and is sent by a base station of a primary cell of the user equipment, where the configuration information includes configuration information of an uplink control channel of the secondary cell;
the processor is configured to instruct, according to the configuration information that is of the uplink control channel of the secondary cell and is received by the receiver, the transmitter to send a Media Access Control control element MAC CE on the uplink control channel of the secondary cell, so as to activate a secondary cell in which the user equipment is currently located; and
the receiver is further configured to receive downlink data sent by the base station of the primary cell by using a base station of the activated secondary cell.

In a first possible implementation manner of the sixth aspect of the embodiments of the present invention,
the transmitter is further configured to send signal indication information of the secondary cell, where the signal indication information is used to indicate signal quality information of the secondary cell; and
the processor is specifically configured to determine a secondary cell with best signal quality indicated by the signal indication information sent by the transmitter as an activated secondary cell, and instruct the transmitter to send the MAC CE on an uplink control channel of the determined activated secondary cell.

In a second possible implementation manner of the sixth aspect of the embodiments of the present invention,
the processor is specifically configured to determine a secondary cell with best signal quality as an activated secondary cell, and instruct the transmitter to send the MAC CE on an uplink control channel of the determined activated secondary cell; or
the processor is specifically configured to: when the receiver receives a secondary cell list sent by the base station of the primary cell, determine a secondary cell that appears first in the secondary cell list as an activated secondary cell, and instruct the transmitter to send the MAC CE on an uplink control channel of the determined activated secondary cell.

A seventh aspect of the embodiments of the present invention provides a communications system, including user equipment, a base station of a primary cell in which the user equipment is located, and a base station of one or more secondary cells, where
the base station of the primary cell is the secondary cell activation apparatus according to the first aspect or any one of the first to the tenth possible implementation manners of the first aspect of the embodiments of the present invention;
the base station of the secondary cell is the secondary cell activation apparatus according to the second aspect or any one of the first to the fourth possible implementation manners of the second aspect of the embodiments of the present invention; and
the user equipment is the secondary cell activation apparatus according to the third aspect or either of the first and the second possible implementation manner of the third aspect of the embodiments of the present invention.

An eighth aspect of the embodiments of the present invention provides a communications system, including user equipment, a base station of a primary cell in which the user equipment is located, and a base station of one or more secondary cells, where
the base station of the primary cell is the base station according to the fourth aspect or any one of the first to the tenth possible implementation manners of the fourth aspect of the embodiments of the present invention;
the base station of the secondary cell is the base station according to the fifth aspect or any one of the first to the fourth possible implementation manners of the fifth aspect of the embodiments of the present invention;
the user equipment is the user equipment according to the sixth aspect or either of the first and the second possible implementation manner of the sixth aspect of the embodiments of the present invention.

A ninth aspect of the embodiments of the present invention provides a secondary cell activation method, including:
sending configuration information of all of one or more secondary cells to user equipment, where the configuration information includes configuration information of an uplink control channel of the secondary cell, and the configuration information of the uplink control channel of the secondary cell is used by the user equipment to send a Media Access Control control element MAC CE on the corresponding uplink control channel to activate the secondary cell; and
sending downlink data for the user equipment to a base station of the secondary cell, so that the base station of the secondary cell forwards the downlink data to the user equipment after the secondary cell is activated.

In a first possible implementation manner of the ninth aspect of the embodiments of the present invention,
the sending configuration information of all of one or more secondary cells to user equipment, where the configuration information includes configuration information of an uplink control channel of the secondary cell specifically includes:
adding the configuration information of the uplink control channel of the secondary cell and other configuration information of the secondary cell into a same radio resource control RRC message, and sending the RRC message to the user equipment; or adding the configuration information of the uplink control channel of the secondary cell and other configuration information of the secondary cell into different radio resource control RRC messages, and sending the RRC messages to the user equipment, where
configuration information of uplink control channels of all the secondary cells is the same or different; and/or
the configuration information of the uplink control channels of all the secondary cells and configuration information of an uplink control channel of a primary cell are the same or different.

With reference to the ninth aspect or the first possible implementation manner of the ninth aspect of the embodiments of the present invention, in a second possible implementation manner of the ninth aspect of the embodiments of the present invention, before the sending configuration information of all of one or more secondary cells to user equipment, the method further includes:
determining the one or more secondary cells according to a measurement report reported by the user equipment; and the sending configuration information of all of one or more secondary cells to user equipment specifically includes: sending the configuration information of the determined one or more secondary cells to the user equipment.

With reference to the ninth aspect or either of the first and the second possible implementation manner of the ninth aspect of the embodiments of the present invention, in a third possible implementation manner of the ninth aspect of the embodiments of the present invention, the sending downlink data for the user equipment to a base station of the secondary cell specifically includes: sending the downlink data for the user equipment to base stations of all the secondary cells.

With reference to the ninth aspect or either of the first and the second possible implementation manner of the ninth aspect of the embodiments of the present invention, in a fourth possible implementation manner of the ninth aspect of the embodiments of the present invention, before the sending downlink data for the user equipment to a base station of the secondary cell, the method further includes:
receiving notification information sent by a base station of a second secondary cell, where the notification information is used to indicate that the user equipment falls within the second secondary cell; and
the sending downlink data for the user equipment to a base station of the secondary cell specifically includes: sending the downlink data for the user equipment to the base station of the second secondary cell.

With reference to the fourth possible implementation manner of the ninth aspect of the embodiments of the present invention, in a fifth possible implementation manner of the ninth aspect of the embodiments of the present invention, before the sending the downlink data for the user equipment to the base station of the second secondary cell, the method further includes:
activating a first secondary cell in the one or more secondary cells, and sending the downlink data for the user equipment to a base station of the first secondary cell; and
if the notification information sent by the base station of the second secondary cell is received and when the downlink data for the user equipment is sent to the base station of the determined second secondary cell, stopping sending the downlink data for the user equipment to the base station of the first secondary cell.

With reference to the fifth possible implementation manner of the ninth aspect of the embodiments of the present invention, in a sixth possible implementation manner of the ninth aspect of the embodiments of the present invention, the activating a first secondary cell in the one or more secondary cells specifically includes:
sending a secondary cell list to the user equipment, where the secondary cell list is used by the user equipment to use a secondary cell that appears first in the secondary cell list as the first secondary cell for activation.

With reference to the ninth aspect or either of the first and the second possible implementation manner of the ninth aspect of the embodiments of the present invention, in a seventh possible implementation manner of the ninth aspect of the embodiments of the present invention, before the sending downlink data for the user equipment to a base station of the secondary cell, the method further includes:
receiving signal indication information that is of the secondary cell and is sent by the user equipment, where the signal indication information is used to indicate quality information of a signal received from the secondary cell by the user equipment; and
determining, according to the signal indication information of the secondary cell, a third secondary cell that needs to be activated; and
the sending downlink data for the user equipment to a base station of the secondary cell specifically includes: sending the downlink data for the user equipment to a base station of the determined third secondary cell.

With reference to the seventh possible implementation manner of the ninth aspect of the embodiments of the present invention, in an eighth possible implementation manner of the ninth aspect of the embodiments of the present invention, after the determining, according to the signal indication information of the secondary cell, a third secondary cell that needs to be activated, the method further includes:
instructing the user equipment to activate the third secondary cell; and
sending activation indication information to the base station of the determined third secondary cell, where the activation indication information is used to instruct to activate the determined third secondary cell.

With reference to the sixth or the seventh possible implementation manner of the ninth aspect of the embodiments of the present invention, in a ninth possible implementation manner of the ninth aspect of the embodiments of the present invention, before the receiving signal indication information that is of the secondary cell and is sent by the user equipment, the method further includes:
activating a fourth secondary cell in the one or more secondary cells, and sending the downlink data for the user equipment to a base station of the fourth secondary cell; and
if the signal indication information that is of the secondary cell and is sent by the user equipment is received and when the downlink data for the user equipment is sent to the base station of the determined third secondary cell, stopping sending the downlink data for the user equipment to the base station of the fourth secondary cell.

With reference to the ninth aspect or any one of the first to the ninth possible implementation manners of the ninth aspect of the embodiments of the present invention, in a tenth possible implementation manner of the ninth aspect of the embodiments of the present invention, the method further includes:
sending, to the base station of the secondary cell, resource configuration information for forwarding the downlink data by the base station of the secondary cell, where the resource configuration information is used by the base stations of all of the one or more secondary cells to synchronously send same downlink data to the user equipment.

A tenth aspect of the embodiments of the present invention provides a secondary cell activation method, including:
receiving downlink data that is for user equipment and is sent by a base station of a primary cell in which the user equipment is located; and
after determining to activate a secondary cell, forwarding the downlink data for the user equipment to the user equipment.

In a first possible implementation manner of the tenth aspect of the embodiments of the present invention, the determining to activate a secondary cell specifically includes:
after the receiving downlink data that is for user equipment and is sent by a base station of a primary cell in which the user equipment is located is performed, determining to activate the secondary cell; or after activation indication information sent by the base station of the primary cell in which the user equipment is located is received, determining to activate the secondary cell.

In a second possible implementation manner of the tenth aspect of the embodiments of the present invention, the determining to activate a secondary cell specifically includes:
receiving a Media Access Control control element MAC CE sent by the user equipment on an uplink control channel, and determining to activate the secondary cell, where configuration information of the uplink control channel is sent by the base station of the primary cell to the user equipment.

With reference to the second possible implementation manner of the tenth aspect of the embodiments of the present invention, in a third possible implementation manner of the tenth aspect of the embodiments of the present invention, the method further includes:
sending notification information to the base station of the primary cell, where the notification information is used to indicate that the user equipment falls within the secondary cell.

With reference to the tenth aspect or any one of the first to the third possible implementation manners of the tenth aspect of the embodiments of the present invention, in a fourth possible implementation manner of the tenth aspect of the embodiments of the present invention, the method further includes:
receiving resource configuration information that is for forwarding the downlink data by a base station of the secondary cell and is sent by the base station of the primary cell; and
the forwarding the downlink data for the user equipment to the user equipment specifically includes: sending same downlink data synchronously with a base station of other one or more secondary cells to the user equipment on a resource corresponding to the resource configuration information.

An eleventh aspect of the embodiments of the present invention provides a secondary cell activation method, including:
receiving configuration information that is of all of one or more secondary cells and is sent by a base station of a primary cell of user equipment, where the configuration information includes configuration information of an uplink control channel of the secondary cell;
sending a Media Access Control control element MAC CE on the uplink control channel of the secondary cell according to the configuration information of the uplink control channel of the secondary cell, so as to activate the secondary cell; and
receiving downlink data sent by the base station of the primary cell by using a base station of the activated secondary cell.

In a first possible implementation manner of the eleventh aspect of the embodiments of the present invention,
configuration information of uplink control channels of all the secondary cells is the same or different; and/or
the configuration information of the uplink control channels of all the secondary cells and configuration information of an uplink control channel of the primary cell are the same or different.

With reference to the eleventh aspect or the first possible implementation manner of the eleventh aspect of the embodiments of the present invention, in a second possible implementation manner of the eleventh aspect of the embodiments of the present invention, before the sending a Media Access Control control element MAC CE on the uplink control channel of the secondary cell of the user equipment, so as to activate the secondary cell, the method further includes:
determining a secondary cell with best signal quality as an activated secondary cell, and sending the MAC CE on an uplink control channel of the determined activated secondary cell; or
when a secondary cell list sent by the base station of the primary cell is received, determining a secondary cell that appears first in the secondary cell list as an activated secondary cell, and sending the MAC CE on an uplink control channel of the determined activated secondary cell; or
sending signal indication information of the secondary cell to the base station of the primary cell, where the signal indication information is used to indicate signal quality information of the secondary cell; determining a secondary cell with best signal quality indicated by the signal indication information as an activated secondary cell; and sending the MAC CE on an uplink control channel of the determined activated secondary cell.

It can be learned that, in the secondary cell activation method in the embodiments of the present invention, a base station of a primary cell only needs to send configuration information of a secondary cell to user equipment, where the configuration information includes configuration information of an uplink control channel of the secondary cell; and send downlink data for the user equipment to a base station of the secondary cell, so that the base station of the secondary cell forwards the downlink data to the user equipment. In this way, the base station of the primary cell does not need to determine, according to a measurement report reported by the user equipment, a secondary cell that needs to be activated and then activate the secondary cell, but directly sends necessary information for communication of the user equipment in the secondary cell, that is, the foregoing configuration information of the uplink control channel of the secondary cell, and the downlink data to the user equipment, so that the user equipment can directly determine which secondary cell to camp on and activate the secondary cell, which reduces time and signaling interworking in a process of activating the secondary cell. Further, in the embodiments, activation of the secondary cell does not require sending an activation instruction by the base station of the primary cell to the secondary cell, so that resources consumed in the prior art when the base station of the primary cell frequently sends activation instructions to secondary cells when the user equipment moves between the secondary cells can be reduced.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic structural diagram of a communications system according to an embodiment of the present invention;
FIG. 2 is a schematic structural diagram of a secondary cell activation apparatus according to a device embodiment 1 of the present invention;
FIG. 3 is a schematic structural diagram of another secondary cell activation apparatus according to a device embodiment 1 of the present invention;
FIG. 4 is a schematic structural diagram of another secondary cell activation apparatus according to a device embodiment 1 of the present invention;
FIG. 5 is a schematic structural diagram of a base station according to a device embodiment 2 of the present invention;
FIG. 6 is a schematic structural diagram of a secondary cell activation apparatus according to a device embodiment 3 of the present invention;
FIG. 7 is a schematic structural diagram of user equipment according to a device embodiment 4 of the present invention;
FIG. 8 is a schematic structural diagram of a secondary cell activation apparatus according to a device embodiment 5 of the present invention;
FIG. 9 is a schematic structural diagram of another secondary cell activation apparatus according to a device embodiment 5 of the present invention;
FIG. 10 is a flowchart of a secondary cell activation method according to a method embodiment 1 of the present invention;
FIG. 11 is a flowchart of another secondary cell activation method according to a method embodiment 1 of the present invention;
FIG. 12 is a flowchart of another secondary cell activation method according to a method embodiment 1 of the present invention;
FIG. 13a to FIG. 13c are flowcharts of a secondary cell activation method according to a method embodiment 2 of the present invention;
FIG. 14 is a flowchart of a secondary cell activation method according to a method embodiment 3 of the present invention;
FIG. 15 is a flowchart of a secondary cell activation method according to a method embodiment 4 of the present invention;
FIG. 16 is a flowchart of a secondary cell activation method according to a method embodiment 5 of the present invention; and
FIG. 17 is a flowchart of a secondary cell activation method according to a method embodiment 6 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

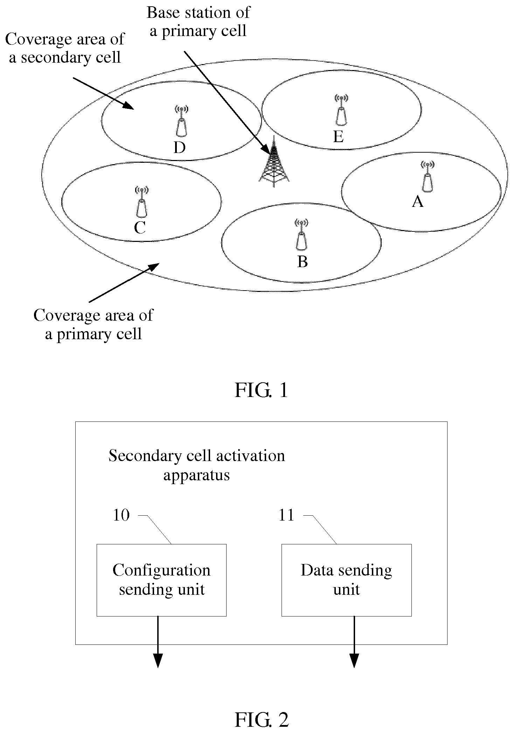

A secondary cell activation method provided in the embodiments of the present invention may be mainly applied to a communications system shown in FIG. 1. The communications includes a base station of a primary cell and a base station of one or more secondary cells (base stations A to E of secondary cells in FIG. 1 are used as an example for description) within a coverage area of the primary cell. The secondary cell mainly provides additional radio resources. The primary cell and the secondary cell may be deployed on a same base station, or may be carried on different base stations.

When a secondary cell is in an active state, user equipment may send a sounding reference signal (Sounding Reference Signal, SRS) in the secondary cell, and report channel indication information, such as a channel quality indicator, and may further detect configuration information that is of a downlink control channel and is transmitted in the secondary cell, and the like. When a secondary cell is in an inactive state, the user equipment does not send an SRS in the secondary cell, does not report channel indication information, does not transmit uplink data, and does not detect configuration information that is of a downlink control channel and is transmitted in the secondary cell, or the like.

### Device embodiment 1 of the present invention

A secondary cell activation apparatus is provided, that is, the foregoing base station of the primary cell, a schematic structural diagram of which is shown in FIG. 2. The apparatus includes a configuration sending unit 10 and a data sending unit 11.

The configuration sending unit 10 is configured to send configuration information of all of one or more secondary cells to user equipment, where the configuration information includes configuration information of an uplink control channel of the secondary cell, and the configuration information of the uplink control channel of the secondary cell is used by the user equipment to send a Media Access Control control element MAC CE on the corresponding uplink control channel to activate the secondary cell; the configuration information further includes delay information, and the delay information is information and the like that are used for performing synchronization between the user equipment and a base station of the secondary cell. Specifically, the configuration sending unit 10 may add the configuration information of the uplink control channel of the secondary cell and other configuration information of the secondary cell into a same radio resource control message, and send the RRC message to the user equipment; or add the configuration information of the uplink control channel of the secondary cell and other configuration information of the secondary cell into different radio resource control messages, and send the RRC messages to the user equipment.

Configuration information of uplink control channels of all the secondary cells is the same or different; and/or the configuration information of the uplink control channels of all the secondary cells and configuration information of an uplink control channel of the primary cell are the same or different.

The data sending unit 11 is configured to send downlink data for the user equipment to the base station of the secondary cell, so that the base station of the secondary cell forwards the downlink data to the user equipment after the secondary cell is activated. The data sending unit 11 may send the downlink data for the user equipment to base stations of all the secondary cells, or may send the downlink data for the user equipment to base stations of some secondary cells.

It can be learned that, according to the secondary cell activation apparatus in this embodiment of the present invention, a configuration sending unit 10 only needs to send configuration information of a secondary cell to user equipment, where the configuration information includes configuration information of an uplink control channel of the secondary cell; and a data sending unit 11 sends downlink data for the user equipment to a base station of the secondary cell, so that the base station of the secondary cell forwards the downlink data to the user equipment. In this way, it is not required to determine, according to a measurement report reported by the user equipment, a secondary cell that needs to be activated and then activate the secondary cell, but necessary information for communication of the user equipment in each secondary cell, that is, the foregoing configuration information of the uplink control channel of the secondary cell, and the downlink data are directly sent to the user equipment, so that the user equipment can directly determine which secondary cell to camp on and activate the secondary cell, which reduces time and signaling interworking in a process of activating the secondary cell. Further, in this embodiment, activation of the secondary cell does not require sending an activation instruction to the secondary cell, so that resources consumed in the prior art when a base station of a primary cell frequently sends activation instructions to secondary cells when the user equipment moves between the secondary cells can be reduced.

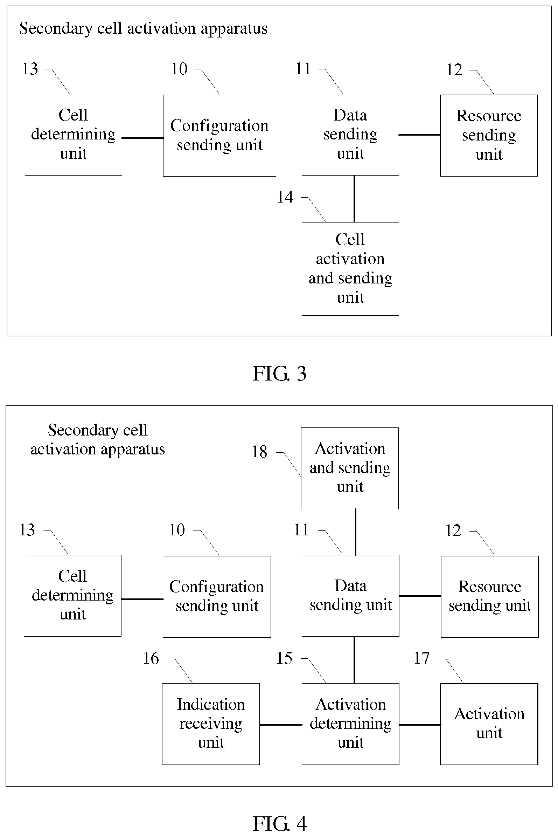

Referring to FIG. 3, in a specific embodiment, in addition to including the structure shown in FIG. 2, the secondary cell activation apparatus may further include a resource sending unit 12, a cell determining unit 13, and a cell activation and sending unit 14.

The resource sending unit 12 is configured to: when the data sending unit 11 sends the downlink data for the user equipment to the base station of the secondary cell, send, to the base station of the secondary cell, resource configuration information for forwarding the downlink data by the secondary cell, where the resource configuration information is used by the base stations of all of the one or more secondary cells to synchronously send same downlink data to the user equipment.

The cell determining unit 13 is configured to: determine the one or more secondary cells according to a measurement report reported by the user equipment, and instruct the configuration sending unit 10 to specifically send the configuration information of the one or more secondary cells determined by the cell determining unit 13 to the user equipment.

The cell activation and sending unit 14 is configured to activate a first secondary cell in the one or more secondary cells, and send the downlink data for the user equipment to a base station of the first secondary cell.

In this embodiment, the cell determining unit 13 needs to determine which cells are used as the secondary cells, and then the configuration sending unit 10 sends configuration information of the determined secondary cells to the user equipment. After the configuration sending unit 10 sends the configuration information, if notification information sent by a base station of a second secondary cell is received, the data sending unit 11 may send the downlink data for the user equipment to the base station of the second secondary cell, where the notification information is used to indicate that the user equipment falls within the second secondary cell.

In another case, after the configuration sending unit 10 sends the configuration information, and before the data sending unit 11 sends the downlink data for the user equipment to the base station of the second secondary cell, the cell activation and sending unit 14 may activate one or more first secondary cells in advance, and send the downlink data for the user equipment to the base station of the first secondary cell. In this case, if the foregoing notification information is received, when sending the downlink data for the user equipment to the base station of the second secondary cell, the data sending unit 11 instructs the cell activation and sending unit 14 to stop sending the downlink data to the base station of the first secondary cell. In this case, to reduce system resources, the cell activation and sending unit 14 may further deactivate the foregoing first secondary cell.

In addition, in this embodiment, when the data sending unit 11 sends the downlink data, the resource sending unit 12 may send the resource configuration information to the base station of the secondary cell, so as to indicate a resource by which the base station of the secondary cell forwards the downlink data. In this way, the base stations of these secondary cells can synchronously forward the same downlink data to the user equipment according to the resource configuration information. Therefore, from a perspective of the user equipment, it is equivalent that the received downlink data is sent from a same signal source, and signal strength is enhanced.

Referring to FIG. 4, in a specific embodiment, in addition to including the structure shown in FIG. 2, the secondary cell activation apparatus may further include a cell determining unit 13, a resource sending unit 12, an activation determining unit 15, an indication receiving unit 16, an activation unit 17, and an activation and sending unit 18.

The indication receiving unit 16 is configured to receive signal indication information that is of the secondary cell and is sent by the user equipment, where the signal indication information is used to indicate quality information of a signal received from the secondary cell by the user equipment.

The activation determining unit 15 is configured to determine, according to the signal indication information that is of the secondary cell and is received by the indication receiving unit 16, a third secondary cell that needs to be activated.

The activation unit 17 is configured to send activation indication information to a base station of the third secondary cell determined by the activation determining unit 15, where the activation indication information is used to instruct to activate the determined third secondary cell; and the activation unit 17 may be further configured to instruct the user equipment to activate the third secondary cell.

The activation and sending unit 18 is configured to activate a fourth secondary cell in the one or more secondary cells, and send the downlink data for the user equipment to a base station of the fourth secondary cell.

In this embodiment, after the configuration sending unit 10 sends the configuration information, and when the indication receiving unit 16 receives the signal indication information, the activation determining unit 15 determines the third secondary cell that needs to be activated, and the data sending unit 11 specifically sends the downlink data for the user equipment to the base station of the third secondary cell determined by the activation determining unit 15. Further, the activation unit 17 may further send the activation indication information to the base station of these third secondary cells to activate the third secondary cell.

In addition, in this embodiment, after the configuration sending unit 10 sends the configuration information, and before the data sending unit 11 sends the downlink data for the user equipment to the base station of the third secondary cell, the activation and sending unit 18 may activate one or more secondary cells, that is, the foregoing fourth secondary cell in advance, and send the downlink data for the user equipment to the base station of the fourth secondary cell. In this way, after the activation determining unit 15 determines the third secondary cell that needs to be activated and the indication receiving unit 16 receives the signal indication information, when sending the downlink data for the user equipment to the base station of the determined third secondary cell, the foregoing data sending unit 11 further specifically needs to instruct the activation and sending unit 18 to stop sending the downlink data for the user equipment to the base station of the fourth secondary cell. In this case, the activation and sending unit 18 may further deactivate the fourth secondary cell.

### Device embodiment 2 of the present invention

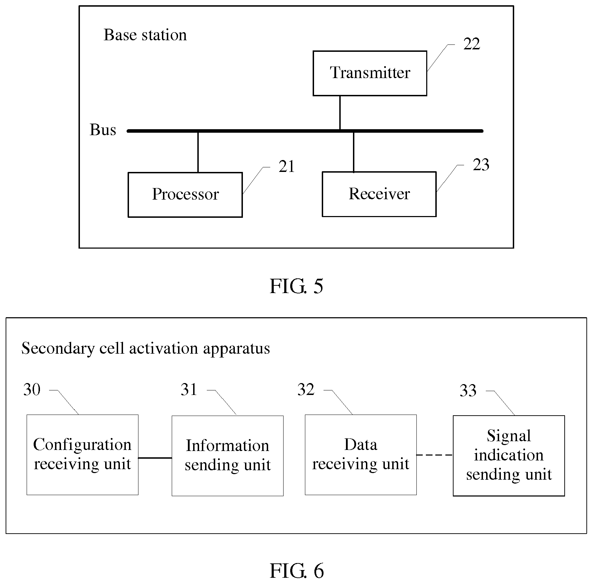

Provided is a base station, that is, the foregoing base station of the primary cell, a schematic structural diagram of which is shown in FIG. 5. The base station includes a processor 21, a transmitter 22, and a receiver 23 that are separately connected to a bus. In addition, the base station may further include a memory, where the memory is configured to store data that is input from the receiver 23, and may further store information such as a necessary file for processing data by the processor 21. The transmitter 22 and the receiver 23 are interfaces on which the base station communicates with another communications device. Specifically:
The transmitter 22 is mainly configured to: send configuration information of all of one or more secondary cells to user equipment, where the configuration information includes configuration information of an uplink control channel of the secondary cell, and the configuration information of the uplink control channel of the secondary cell is used by the user equipment to send a Media Access Control control element MAC CE on the corresponding uplink control channel to activate the secondary cell; and send downlink data for the user equipment to a base station of the secondary cell, so that the base station of the secondary cell forwards the downlink data to the user equipment after the secondary cell is activated. The transmitter 22 is specifically configured to send the downlink data for the user equipment to base stations of all the secondary cells or base stations of some secondary cells. In this way, the base station does not need to determine, according to a measurement report reported by the user equipment, a secondary cell that needs to be activated and then activate the secondary cell, but directly sends necessary information for communication of the user equipment in each secondary cell, that is, the foregoing configuration information of the uplink control channel of the secondary cell, and the downlink data to the user equipment, so that the user equipment can directly determine which secondary cell to camp on and activate the secondary cell, which reduces time and signaling interworking in a process of activating the secondary cell. Further, in this embodiment, activation of the secondary cell does not require sending an activation instruction to the secondary cell, so that resources consumed in the prior art when a base station of a primary cell frequently sends activation instructions to secondary cells when the user equipment moves between the secondary cells can be reduced.

The processor 21 may add the configuration information of the uplink control channel of the secondary cell and other configuration information of the secondary cell into a same radio resource control message, and instruct the transmitter 22 to send the RRC message to the user equipment. Alternatively, the processor 21 may add the configuration information of the uplink control channel of the secondary cell and other configuration information of the secondary cell into different radio resource control messages, and instruct the transmitter 22 to send the RRC messages to the user equipment. Configuration information of uplink control channels of all the secondary cells is the same or different; and/or the configuration information of the uplink control channels of all the secondary cells and configuration information of an uplink control channel of the primary cell are the same or different.

In a specific embodiment, the receiver 23 of the base station is further configured to receive a measurement report reported by the user equipment, and the processor 21 may first determine the one or more secondary cells according to the measurement report that is reported by the user equipment and is received by the receiver 23, and then instruct the transmitter 22 to specifically send the configuration information of the determined one or more secondary cells to the user equipment. After the transmitter 22 sends the configuration information of the determined one or more secondary cells to the user equipment, if the receiver 23 receives notification information sent by a base station of a second secondary cell, the transmitter 22 may send the downlink data for the user equipment to the base station of the second secondary cell, where the notification information is used to indicate that the user equipment falls within the second secondary cell.

In another case, after the transmitter 22 sends the configuration information, and before the transmitter 22 sends the downlink data for the user equipment to the base station of the second secondary cell, the processor 21 is further configured to activate one or more first secondary cells in the one or more secondary cells, and then instruct the transmitter 22 to specifically send the downlink data for the user equipment to a base station of the first secondary cell. In this case, if the receiver 23 receives the foregoing notification information, when sending the downlink data for the user equipment to the base station of the second secondary cell, the transmitter 22 stops sending the downlink data to the base station of the first secondary cell. In this case, to reduce system resources, the processor 21 may further deactivate the foregoing first secondary cell.

In addition, in this embodiment, when sending the downlink data for the user equipment, the transmitter 22 of the base station is further configured to send, to the base station of the secondary cell, resource configuration information for forwarding the downlink data by the secondary cell, so as to indicate a resource by which the base station of the secondary cell forwards the downlink data, where the resource configuration information is used by the base stations of all of the one or more secondary cells to synchronously send same downlink data to the user equipment. Therefore, from a perspective of the user equipment, it is equivalent that the received downlink data is sent from a same signal source, and signal strength is enhanced.

In another specific embodiment, after the transmitter 22 sends the configuration information, and when the receiver 23 receives signal indication information that is of the secondary cell and is sent by the user equipment according to the configuration information of the uplink control channel of the secondary cell in the configuration information (mainly on the corresponding uplink control channel), where the signal indication information is used to indicate quality information of a signal received from the secondary cell by the user equipment, the processor 21 determines, according to the signal indication information of the secondary cell, a third secondary cell that needs to be activated, and then the transmitter 22 sends the downlink data for the user equipment to a base station of the determined third secondary cell. Further, the transmitter 22 is further configured to send activation indication information to the base station of the determined third secondary cell, where the activation indication information is used to instruct to activate the determined third secondary cell; and the transmitter 22 may be further configured to instruct the user equipment to activate the third secondary cell.

Further, after the transmitter 22 sends the configuration information, and before the transmitter 22 sends the downlink data for the user equipment to the base station of the third secondary cell, the processor 21 may further activate one or more fourth secondary cells in the one or more secondary cells in advance, and the transmitter 22 sends the downlink data for the user equipment to a base station of the fourth secondary cell. In this way, after the processor 21 of the base station (that is, the base station of the primary cell) in this embodiment determines the third secondary cell that needs to be activated, when sending the downlink data for the user equipment to the base station of the determined third secondary cell, the transmitter 22 stops sending the downlink data for the user equipment to the base station of the fourth secondary cell. In this case, the processor 21 may further deactivate the fourth secondary cell.

### Device embodiment 3 of the present invention

A secondary cell activation apparatus is provided, that is, the foregoing user equipment, a schematic structural diagram of which is shown in FIG. 6. The apparatus includes a configuration receiving unit 30, an information sending unit 31, and a data receiving unit 32.

The configuration receiving unit 30 is configured to receive configuration information that is of all of one or more secondary cells and is sent by a base station of a primary cell of the user equipment, where the configuration information includes configuration information of an uplink control channel of the secondary cell, and the configuration information may further include delay information, where the delay information is information used for performing synchronization between the user equipment and a base station of a secondary cell. Configuration information of uplink control channels of all the secondary cells is the same or different; and/or the configuration information of the uplink control channels of all the secondary cells and configuration information of an uplink control channel of the primary cell are the same or different.

The information sending unit 31 is configured to send a Media Access Control control element MAC CE on the uplink control channel of the secondary cell according to the configuration information that is of the uplink control channel of the secondary cell and is received by the configuration receiving unit 30, so as to activate a secondary cell in which the user equipment is currently located.

The information sending unit 31 is specifically configured to determine a secondary cell with best signal quality as an activated secondary cell, and send the MAC CE on an uplink control channel of the determined activated secondary cell; or the information sending unit 31 is specifically configured to: when a secondary cell list sent by the base station of the primary cell is received, determine a secondary cell that appears first in the secondary cell list as an activated secondary cell, and send the MAC CE on an uplink control channel of the determined activated secondary cell.

The data receiving unit 32 is configured to receive downlink data sent by the base station of the primary cell by using a base station of the activated secondary cell.

In a specific embodiment, the secondary cell activation apparatus may further include a signal indication sending unit 33, configured to send signal indication information of the secondary cell, where the signal indication information is used to indicate signal quality information of the secondary cell, so that the information sending unit 31 may determine a secondary cell with best signal quality indicated by the signal indication information sent by the signal indication sending unit 33 as an activated secondary cell, and send the MAC CE on an uplink control channel of the determined activated secondary cell. In addition, the data receiving unit 32 does not receive the downlink data sent by base stations of multiple secondary cells, but receives only the downlink data sent by a base station of the secondary cell determined by the base station of the primary cell according to the signal indication information, thereby saving system resources. A unit indicated by a dashed-line part in FIG. 6 refers to an optional unit in the secondary cell activation apparatus.

According to the secondary cell activation apparatus in this embodiment of the present invention, a configuration receiving unit 30 receives configuration information sent by a base station of a primary cell, where the configuration information includes configuration information of an uplink control channel of a secondary cell, so that an information sending unit 31 actively sends a MAC CE on the corresponding uplink control channel according to the configuration information, so as to activate the secondary cell, and a data receiving unit 32 receives downlink data sent by a base station of the activated secondary cell. In this way, the base station of the primary cell does not need to determine, according to a measurement report reported by the user equipment, a secondary cell that needs to be activated and then activate the secondary cell, but directly sends necessary information for communication of the user equipment in the secondary cell, that is, the foregoing configuration information of the uplink control channel of the secondary cell, and the downlink data to the user equipment, so that the user equipment can directly determine which secondary cell to camp on and activate the secondary cell, which reduces time and signaling interworking in a process of activating the secondary cell.

### Device embodiment 4 of the present invention

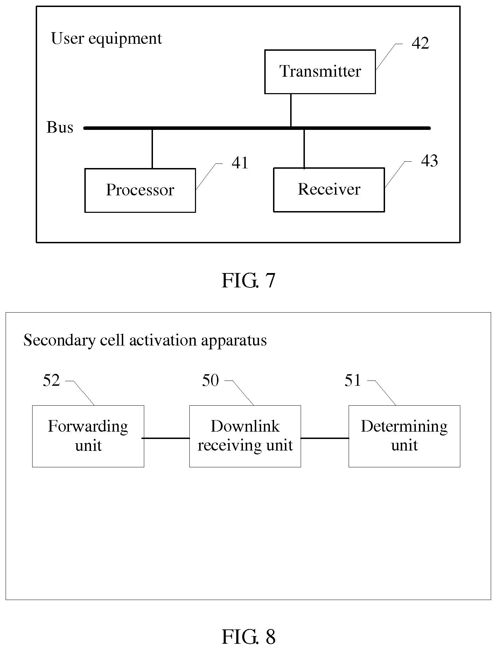

User equipment is provided. A schematic structural diagram of which is shown in FIG. 7. The user equipment includes a processor 41, a transmitter 42, and a receiver 43 that are separately connected to a bus. In addition, the user equipment may further include a memory, where the memory is configured to store data that is input from the receiver 43, and may further store information such as a necessary file for processing data by the processor 41. The transmitter 42 and the receiver 43 are interfaces on which the user equipment communicates with another communications device. Specifically:
The receiver 43 is configured to receive configuration information that is of all of one or more secondary cells and is sent by a base station of a primary cell of the user equipment, where the configuration information includes configuration information of an uplink control channel of the secondary cell; the processor 41 is configured to: instruct, according to the configuration information of the uplink control channel of the secondary cell after the receiver 43 receives the configuration information of all the secondary cells, the transmitter 42 to send a Media Access Control control element MAC CE on the uplink control channel of the secondary cell, so as to activate a secondary cell in which the user equipment is currently located; and then the receiver 43 is configured to receive downlink data sent by the base station of the primary cell by using a base station of the activated secondary cell. In this way, the base station of the primary cell does not need to determine, according to a measurement report reported by the user equipment, a secondary cell that needs to be activated and then activate the secondary cell, but directly sends necessary information for communication of the user equipment in the secondary cell, that is, the foregoing configuration information of the uplink control channel of the secondary cell, and the downlink data to the user equipment, so that the user equipment can directly determine which secondary cell to camp on and activate the secondary cell, which reduces time and signaling interworking in a process of activating the secondary cell.

The processor 41 is specifically configured to determine a secondary cell with best signal quality as an activated secondary cell, and instruct the transmitter 42 to send the MAC CE on an uplink control channel of the determined activated secondary cell; or the processor 41 is specifically configured to: when a secondary cell list sent by the base station of the primary cell is received, determine a secondary cell that appears first in the secondary cell list as an activated secondary cell, and instruct the transmitter 42 to send the MAC CE on an uplink control channel of the determined activated secondary cell.

In a specific embodiment, the transmitter 42 of the user equipment is further configured to send signal indication information of the secondary cell, where the signal indication information is used to indicate signal quality information of the secondary cell, so that the processor 41 may determine a secondary cell with best signal quality indicated by the signal indication information sent by the transmitter 42 as an activated secondary cell, and instruct the transmitter to send the MAC CE on an uplink control channel of the determined activated secondary cell. Further, the receiver 43 may specifically receive the downlink data sent by a base station of the secondary cell determined by the base station of the primary cell according to the signal indication information, and does not receive the downlink data sent by base stations of multiple secondary cells, thereby saving system resources.

### Device embodiment 5 of the present invention

A secondary cell activation apparatus is provided, that is, the foregoing base station of the secondary cell, a schematic structural diagram of which may be shown in FIG. 8. The apparatus includes a downlink receiving unit 50, a determining unit 51, and a forwarding unit 52.

The downlink receiving unit 50 is configured to receive downlink data that is for user equipment and is sent by a base station of a primary cell in which the user equipment is located, where the downlink data mainly refers to user-plane data, that is, service data, and is downlink data sent by the base station of the primary cell to the user equipment.

The determining unit 51 is configured to determine to activate the secondary cell. Specifically, the determining unit 51 may determine to activate the secondary cell after the downlink receiving unit 50 receives the downlink data for the user equipment; or the determining unit 51 may determine to activate the secondary cell after activation indication information sent by the base station of the primary cell is received, where the activation indication information is used to instruct to activate the secondary cell.

The forwarding unit 52 is configured to: after the determining unit 51 determines to activate the secondary cell, forward the downlink data that is for the user equipment and is received by the downlink receiving unit 50 to the user equipment.

According to the secondary cell activation apparatus in this embodiment, after a downlink receiving unit 50 receives downlink data that is for user equipment and is sent by a base station of a primary cell, a determining unit 51 may determine, by itself, that a secondary cell is activated, and then a forwarding unit 52 forwards the downlink data to the user equipment. In this way, activation of the secondary cell may not require a complex process, for example, steps of the user equipment reporting a measurement report, the base station of the primary cell performing activation, and the base station of the primary cell notifying a base station of the secondary cell. Instead, the base station of the primary cell sends, to the secondary cell activation apparatus, the downlink data to be sent to the user equipment, and sends configuration information of an uplink control channel of the secondary cell to the user equipment, so that the user equipment can directly determine which secondary cell to camp on and activate the secondary cell, and the secondary cell activation apparatus can also determine to activate the secondary cell, which reduces time and signaling interworking in a process of activating the secondary cell. Further, in this embodiment, activation of the secondary cell does not require sending an activation instruction by the base station of the primary cell to the secondary cell, so that resources consumed in the prior art when the base station of the primary cell frequently sends activation instructions to secondary cells when the user equipment moves between the secondary cells can be reduced.

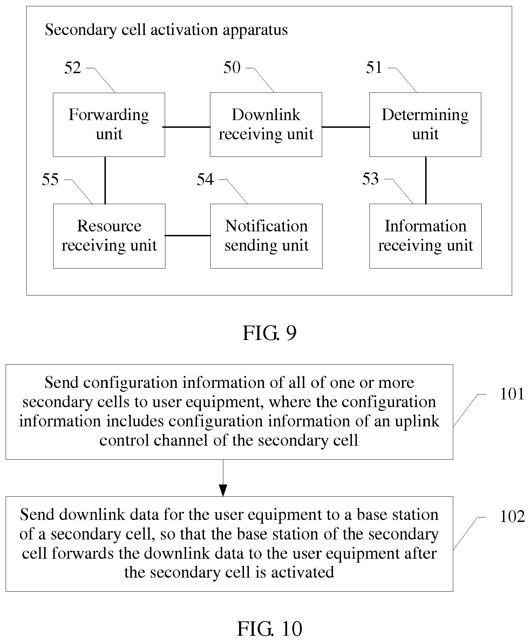

Referring to FIG. 9, in a specific embodiment, in addition to including the structure shown in FIG. 8, the secondary cell activation apparatus may further include an information receiving unit 53, a notification sending unit 54, and a resource receiving unit 55.

The information receiving unit 53 is configured to receive a Media Access Control control element MAC CE sent by the user equipment on an uplink control channel, where configuration information of the uplink control channel is sent by the base station of the primary cell to the user equipment, so that the user equipment can directly send the MAC CE according to the configuration information.

The notification sending unit 54 is configured to send notification information to the base station of the primary cell, where the notification information is used to indicate that the user equipment falls within the secondary cell, so that the base station of the primary cell may stop sending the downlink data for the user equipment to a base station of another secondary cell, thereby saving system resources.

The resource receiving unit 55 is configured to receive resource configuration information that is for forwarding the downlink data by the base station of the secondary cell and is sent by the base station of the primary cell.

According to the apparatus in this embodiment, after the information receiving unit 53 receives any MAC CE, the determining unit 51 determines to activate the base station of the secondary cell. In addition, after the information receiving unit 53 receives the MAC CE, the notification sending unit 54 may send the foregoing notification information to the base station of the primary cell.

In another case, when sending the downlink data to base stations of multiple secondary cells, the base station of the primary cell may also send the foregoing resource configuration information to the base stations of the secondary cells. In this way, after the resource receiving unit 55 of the secondary cell activation apparatus in this embodiment receives the resource configuration information, the forwarding unit 52 is specifically configured to send same downlink data synchronously with a base station of other one or more secondary cells to the user equipment on a resource corresponding to the resource configuration information received by the resource receiving unit 55. In this way, for the user equipment, it is equivalent that the received downlink data is sent from one signal source, and strength of a received signal is enhanced.

### Device embodiment 6 of the present invention

A base station is provided, that is, the foregoing base station of the secondary cell, a schematic structural diagram of which may be similar to the structure of the base station shown in FIG. 5 in the foregoing device embodiment 2. The base station includes a processor, a transmitter, and a receiver that are separately connected to a bus. In addition, the base station may further include a memory, where the memory is configured to store data that is input from the receiver, and may further store information such as a necessary file for processing data by the processor. The transmitter and the receiver are interfaces on which the base station communicates with another communications device. Specifically:
The receiver is configured to receive downlink data that is for user equipment and is sent by a base station of a primary cell in which the user equipment is located; the processor is configured to determine to activate the secondary cell; and the transmitter is configured to: after the processor determines to activate the secondary cell, forward the downlink data that is for the user equipment and is received by the transmitter to the user equipment. The processor is specifically configured to: after the receiver receives the downlink data for the user equipment, determine to activate the secondary cell. Alternatively, the processor is specifically configured to: after the receiver receives activation indication information sent by the base station of the primary cell in which the user equipment is located, determine to activate the secondary cell, and in this case, the receiver is further configured to receive the activation indication information sent by the base station of the primary cell in which the user equipment is located, where the activation indication information is used to instruct to activate the secondary cell.

In this way, activation of the secondary cell may not require a complex process, for example, steps of user equipment reporting a measurement report, a base station of a primary cell performing activation, and the base station of the primary cell notifying a base station of a secondary cell. Instead, the base station of the primary cell sends, to the base station of the secondary cell, downlink data to be sent to the user equipment, and sends configuration information of an uplink control channel of the secondary cell to the user equipment, so that the user equipment can directly determine which secondary cell to camp on and activate the secondary cell, and the base station of the secondary cell can also determine to activate the secondary cell, which reduces time and signaling interworking in a process of activating the secondary cell. Further, in this embodiment, activation of the secondary cell does not require sending an activation instruction by the base station of the primary cell to the secondary cell, so that resources consumed in the prior art when the base station of the primary cell frequently sends activation instructions to secondary cells when the user equipment moves between the secondary cells can be reduced.

In a specific embodiment, the receiver is further configured to receive a Media Access Control control element MAC CE sent by the user equipment on an uplink control channel; and the processor is further configured to: after the receiver receives the MAC CE, determine to activate a base station of the secondary cell, where configuration information of the uplink control channel is sent by the base station of the primary cell to the user equipment. In addition, after the receiver receives the MAC CE, the transmitter is further configured to send notification information to the base station of the primary cell, where the notification information is used to indicate that the user equipment falls within the secondary cell, so that the base station of the primary cell may stop sending the downlink data for the user equipment to a base station of another secondary cell.

In another case, when sending the downlink data to base stations of multiple secondary cells, the base station of the primary cell may also send the foregoing resource configuration information to the base stations of the secondary cells. In this way, when the receiver of the base station in this embodiment is further configured to receive the resource configuration information that is for forwarding the downlink data by the base station of the secondary cell and is sent by the base station of the primary cell, the transmitter is specifically configured to send same downlink data synchronously with a base station of other one or more secondary cells to the user equipment on a resource corresponding to the resource configuration information received by the receiver. In this way, for the user equipment, it is equivalent that the received downlink data is sent from one signal source, and strength of a received signal is enhanced.

An embodiment of the present invention further provides a communications system, a schematic structural diagram of which may be shown in FIG. 1 (user equipment is not drawn in FIG. 1). The communications system mainly includes user equipment, a base station of a primary cell in which the user equipment is located, and a base station of one or more secondary cells.

A structure of the base station of the primary cell may be the structure of any secondary cell activation apparatus described in the foregoing device embodiment 1, a structure of the user equipment may be the structure of the secondary cell activation apparatus described in the foregoing device embodiment 3, and details are not described herein. The base station of the secondary cell is configured to receive downlink data that is for the user equipment and is sent by the base station of the primary cell, and forward the downlink data to the user equipment after the secondary cell is activated, where a specific structure may be the structure of any secondary cell activation apparatus described in the foregoing device embodiment 5.

An embodiment of the present invention further provides another communications system, a schematic structural diagram of which may be shown in FIG. 1 (user equipment is not drawn in FIG. 1). The communications system mainly includes user equipment, a base station of a primary cell in which the user equipment is located, and a base station of one or more secondary cells.

A structure of the base station of the primary cell may be the structure of the base station described in the foregoing device embodiment 2, a structure of the user equipment may be the structure of the user equipment described in the foregoing device embodiment 4, and details are not described herein. The base station of the secondary cell is configured to receive downlink data that is for the user equipment and is sent by the base station of the primary cell, and forward the downlink data to the user equipment after the secondary cell is activated, where a specific structure may be the structure of the base station described in the foregoing device embodiment 6.

### Method embodiment 1 of the present invention

A method in this embodiment is a method executed by a base station of a primary cell. A flowchart is shown in FIG. 10, and the method includes the following steps:
Step 101: Send configuration information of all of one or more secondary cells to user equipment, where the configuration information herein refers to information that is about the secondary cell and that is required for normal communication when the user equipment camps on the secondary cell, for example, an identity (ID), downlink carrier information, and a physical cell channel of the secondary cell, the configuration information in this embodiment needs to include configuration information of an uplink control channel of the secondary cell, for example, resource information of a physical uplink control channel (Physical Uplink Control Channel, PUCCH), and the configuration information may further include delay information and the like, where the delay information is information for performing synchronization between a base station of the secondary cell and the user equipment when the user equipment performs communication by using a radio resource of the secondary cell.

It may be understood that, after the user equipment and the base station of the primary cell establish a communication connection, to expand radio resources of the primary cell, the base station of the primary cell may configure one or more cells within a coverage area of the primary cell as the secondary cells to provide additional radio resources. In this embodiment, the base station of the primary cell needs to send the configuration information of all of the one or more secondary cells to the user equipment, so that the user equipment can actively send a Media Access Control control element (MAC CE) according to the configuration information that is of the uplink control channel and is in the configuration information, so as to activate the secondary cell, where the MAC CE refers to information transmitted at a MAC layer, such as a channel quality indicator (CQI), a scheduling request, an SRS, and a buffer status report (Buffer Status Report, BSR); and then the base station of the secondary cell may schedule uplink resources for the user equipment according to the MAC CE reported by the user equipment, so as to ensure uplink and downlink communication of the user equipment.

Specifically, the base station of the primary cell may add the configuration information of the uplink control channel of the secondary cell and other configuration information of the secondary cell into a same radio resource control (Radio Resource Control, RRC) message, such as an RRC connection reconfiguration (RRC connection reconfiguration) message, or different RRC messages, and send the RRC message or the RRC messages to the user equipment.

Configuration information uplink control channels of all the secondary cells may be the same, for example, time-frequency resources of the uplink control channels are the same, or may be different; and/or
it is agreed that the configuration information of the uplink control channels of all the secondary cells and configuration information of an uplink control channel of the primary cell may be the same; in this case, because when the user equipment connects to the primary cell, the base station of the primary cell has already sent the configuration information of the uplink control channel of the primary cell to the user equipment, it may be not required herein to reconfigure the configuration information of the uplink control channels of all the secondary cells for the user equipment, and the user equipment learns the configuration information of the uplink control channels of all the secondary cells only according to the configuration information of the uplink control channel of the primary cell; or
in another embodiment, it is agreed that the configuration information of the uplink control channels of all the secondary cells and configuration information of an uplink control channel of the primary cell are different, but may be partly the same, for example, time-domain positions of uplink control channels are consistent; in this case, because when the user equipment connects to the primary cell, the base station of the primary cell has already sent the configuration information of the uplink control channel of the primary cell to the user equipment, it may be not required to reconfigure information that is in the configuration information of the uplink control channels of all the secondary cells and is the same as information about the primary cell for the user equipment, but instead an inconsistent part of the information is sent to the user equipment.

Step 102: Send downlink data for the user equipment to the base station of the secondary cell, so that the base station of the secondary cell forwards the downlink data to the user equipment after the secondary cell is activated, where the base station of the secondary cell may activate the secondary cell by itself, or the base station of the primary cell may instruct the base station of the secondary cell to activate the secondary cell, or the user equipment may determine to activate the secondary cell.

The downlink data herein mainly refers to user-plane data sent by the base station of the primary cell to the user equipment, that is, service data, but control-plane data (which is mainly signaling) is still transmitted by the base station of the primary cell. In this way, the service data of the user equipment may be transmitted by using the additional radio resources provided by the secondary cell, which expands the resources of the primary cell. In addition, because the control-plane data is transmitted by the base station of the primary cell, transmission of some important signaling can be ensured. The downlink data that is for the user equipment and is sent by the base station of the primary cell is downlink data in a process of communication between the user equipment and the base station of the primary cell.

It can be learned that, in the secondary cell activation method in this embodiment of the present invention, a base station of a primary cell only needs to send configuration information of a secondary cell to user equipment, where the configuration information includes configuration information of an uplink control channel of the secondary cell; and send downlink data for the user equipment to a base station of the secondary cell, so that the base station of the secondary cell forwards the downlink data to the user equipment. In this way, the base station of the primary cell does not need to determine, according to a measurement report reported by the user equipment, a secondary cell that needs to be activated and then activate the secondary cell, but directly sends necessary information for communication of the user equipment in the secondary cell, that is, the foregoing configuration information of the uplink control channel of the secondary cell, and the downlink data to the user equipment, so that the user equipment can directly determine which secondary cell to camp on and activate the secondary cell, which reduces time and signaling interworking in a process of activating the secondary cell. Further, in this embodiment, activation of the secondary cell does not require sending an activation instruction by the base station of the primary cell to the secondary cell, so that resources consumed in the prior art when the base station of the primary cell frequently sends activation instructions to secondary cells when the user equipment moves between the secondary cells can be reduced.

In a specific embodiment, when performing the foregoing step 102, the base station of the primary cell may not consider a secondary cell in which the user equipment is located, but send the downlink data for the user equipment to base stations of all the secondary cells for forwarding, and the user equipment determines, by itself, which secondary cell needs to be used. The user equipment actually camps on a secondary cell, and can certainly receive the downlink data forwarded by the secondary cell. When moving to another secondary cell, the user equipment can also receive the downlink data forwarded by the another secondary cell.

Further, in this embodiment, when sending the downlink data, the base station of the primary cell may further send, to the base station of the secondary cell, resource configuration information for forwarding the downlink data by the secondary cell, for example, information indicating a subframe in which the downlink data is forwarded, so that after receiving the downlink data, base stations of multiple secondary cells may perform multicast-broadcast single-frequency network (MBSFN) transmission according to the resource configuration information. Specifically, the base stations of all the secondary cells send same downlink data synchronously (that is, at the same time) to the user equipment according to the resource configuration information. In this way, for a receiver, that is, the user equipment, it is equivalent that the received downlink data is sent from one signal source, and signal strength is obviously enhanced.

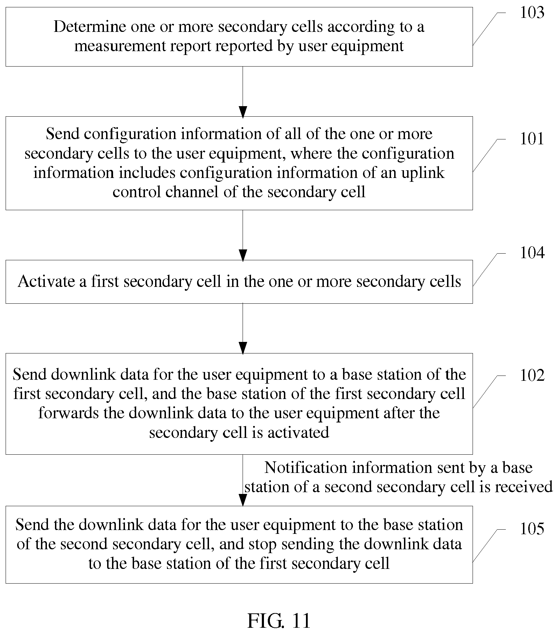

Referring to FIG. 11, in another specific embodiment, before performing the foregoing step 101, the base station of the primary cell may further perform step 103, and after performing step 101, the base station of the primary cell may further perform steps 104 and 105. Specifically:
Step 103: Determine the one or more secondary cells according to a measurement report reported by the user equipment, so that when performing step 101, the base station of the primary cell specifically sends the configuration information of the one or more secondary cells determined in step 103 to the user equipment, where the base station of the primary cell may determine the one or more secondary cells according to position information or channel information in the measurement report, so as to determine a secondary cell that is near an actual physical position of the user equipment and whose channel quality is relatively good.
Step 104: Activate a first secondary cell in the one or more secondary cells, where specifically, the base station of the primary cell may send an activation instruction to a base station of the first secondary cell by using a Media Access Control (Media Access Control, MAC) control element (control element, CE) to request to activate the first secondary cell; in another specific embodiment, the base station of the primary cell may not activate the first secondary cell by using a separate step, but send a secondary cell list to the user equipment when performing step 101 of sending the configuration information of the secondary cell, where the secondary cell list includes information about one or more secondary cells, and by default, the user equipment uses a secondary cell that appears first (or the n^{th}) in the secondary cell list as the first secondary cell for activation.

It may be understood that, to reduce system resources, the base station of the primary cell does not send the downlink data for the user equipment to the base stations of all the secondary cells, but activates the one or more secondary cells, that is, the first secondary cell in advance, and then specifically sends the downlink data for the user equipment to the base station of the first secondary cell when performing the foregoing step 102. If the user equipment is actually not within the first secondary cell, but camps on a second secondary cell, the user equipment may obtain configuration information of an uplink control channel of the second secondary cell according to the configuration information received in the foregoing step 101. Then, the user equipment sends the MAC CE on the uplink control channel of the second secondary cell, so that a base station of the second secondary cell can learn that the user equipment falls within the second secondary cell, and sends notification information to the base station of the primary cell. If the base station of the primary cell receives the notification information sent by the base station of the second secondary cell, the base station of the primary cell performs step 105, where the notification information is used to indicate that the user equipment falls within the second secondary cell. The first secondary cell and the second secondary cell do not represent a sequence relationship, but are used to indicate different secondary cells.

Step 105: Send the downlink data for the user equipment to a base station of a second secondary cell, and stop sending the downlink data to the base station of the first secondary cell, where to reduce system resources, the base station of the primary cell may further deactivate the first secondary cell, that is, send a deactivation instruction to the base station of the first secondary cell by using the MAC CE.

It should be noted that, in another specific embodiment, although activating the first secondary cell in advance, when performing the foregoing step 102, the base station of the primary cell may still send the downlink data for the user equipment to the base stations of all the secondary cells for forwarding. In addition, the second secondary cell in which the user equipment is currently located may not send the notification information to the base station of the primary cell, and the base station of the primary cell does not consider the secondary cell in which the user equipment is located, but sends the downlink data to the base stations of all the secondary cells for forwarding, which reduces signaling between the base station of the secondary cell and the base station of the primary cell.

In addition, it should be noted that, in another specific embodiment, the foregoing step 104 is optional, that is, the base station of the primary cell may not activate the first secondary cell in advance, but send the downlink data for the user equipment to the base stations of all the secondary cells when performing step 102. Then, if the base station of the primary cell receives the foregoing notification information, which indicates that the user equipment falls within the second secondary cell, the base station of the primary cell performs step 105. Alternatively, after the base station of the primary cell completes performing the foregoing step 101, and only if the foregoing notification information, which indicates that the user equipment falls within the second secondary cell, is received, the base station of the primary cell performs step 102, and specifically sends the downlink data for the user equipment only to the base station of the second secondary cell.

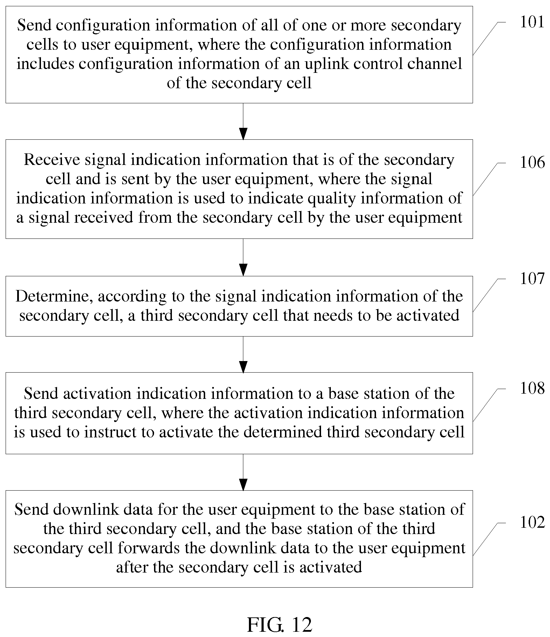

Referring to FIG. 12, in another specific embodiment, before performing the foregoing step 102, the base station of the primary cell may further perform steps 106 and 107 to implicitly activate the secondary cell. Further, the base station of the primary cell may further perform step 108 to explicitly activate the secondary cell. Specifically:
Step 106: Receive signal indication information that is of the secondary cell and is sent by the user equipment, where the signal indication information is used to indicate signal quality information of the secondary cell; the user equipment specifically obtains the signal indication information according to quality information of a signal received from a base station of the secondary cell, and the user equipment may add the signal indication information into a scheduling request (scheduling request, SR) or another message to send the signal indication information to the base station of the primary cell.
Step 107: Determine, according to the signal indication information of the secondary cell, a third secondary cell that needs to be activated, so that when performing the foregoing step 102, the base station of the primary cell sends the downlink data for the user equipment to a base station of the determined third secondary cell.

It may be understood that, when camping on a secondary cell, the user equipment may send signal indication information of the secondary cell to the base station of the primary cell, where the signal indication information may indicate that the secondary cell has best signal quality, or may indicate signal quality information of multiple secondary cells, so that the base station of the primary cell may select a secondary cell that has best signal quality as the third secondary cell that needs to be activated.

Step 108: Send activation indication information to the base station of the third secondary cell determined in step 107, where the activation indication information is used to instruct to activate the determined third secondary cell; in addition, the base station of the primary cell may also instruct the user equipment to activate the third secondary cell, so that the user equipment may send the MAC CE to the base station of the third secondary cell.

It should be noted that, there is no absolute sequence relationship between the foregoing steps 108 and 102, which may be performed concurrently or may be performed in sequence, and FIG. 12 shows only a specific implementation manner.

Further, in a specific embodiment, after performing the foregoing step 101, the base station of the primary cell may activate a fourth secondary cell in the one or more secondary cells in advance, and send the downlink data for the user equipment to a base station of the fourth secondary cell for forwarding. If the user equipment discovers that the user equipment enters a new third secondary cell, the user equipment may send signal indication information to indicate that the third secondary cell has best signal quality, so that after performing the foregoing steps 106 and 107, when performing step 102 of sending the downlink data for the user equipment to the base station of the third secondary cell, the base station of the primary cell may stop sending the downlink data for the user equipment to the base station of the fourth secondary cell, so as to reduce system resources.

### Method embodiment 2 of the present invention

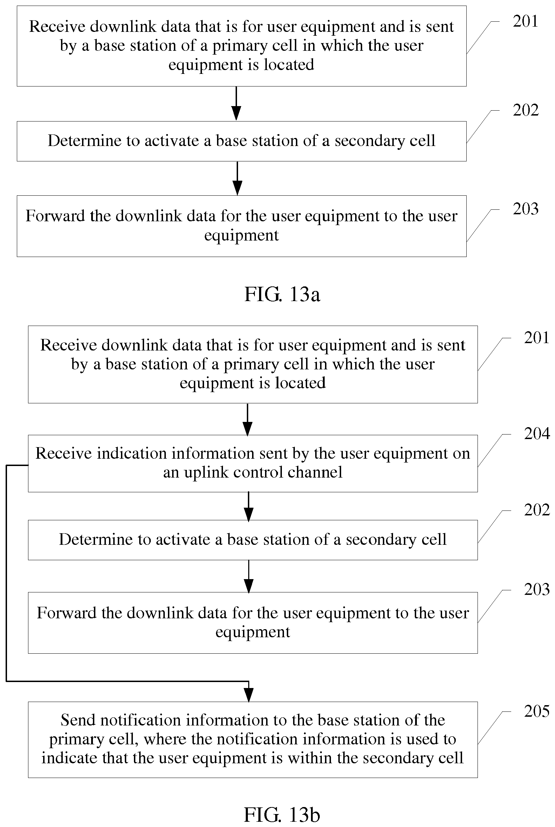

A secondary cell activation method is provided, and may be mainly applied to the communications system shown in FIG. 1. The method in this embodiment is a method executed by a base station of a secondary cell in the communications system. A flowchart is shown in FIG. 13a, and the method includes the following steps:
Step 201: Receive downlink data that is for user equipment and is sent by a base station of a primary cell in which the user equipment is located, and then perform step 202, where the downlink data mainly refers to user-plane data, that is, service data, and is downlink data sent by the base station of the primary cell to the user equipment.
Step 202: Determine to activate the secondary cell, where in this embodiment, after receiving the downlink data for the user equipment, the base station of the secondary cell may consider that the secondary cell is activated, and then may perform step 203; or when receiving activation indication information sent by the base station of the foregoing primary cell, the base station of the secondary cell determines that the secondary cell needs to be activated, where the activation indication information is used to instruct to activate the secondary cell.
Step 203: Forward the downlink data for the user equipment to the user equipment.

In the method in this embodiment, after receiving downlink data that is for user equipment and is sent by a base station of a primary cell, a base station of a secondary cell may determine, by itself, that the secondary cell is activated, and forward the downlink data to the user equipment. In this way, activation of the secondary cell may not require a complex process, for example, steps of the user equipment reporting a measurement report, the base station of the primary cell performing activation, and the base station of the primary cell notifying the base station of the secondary cell. Instead, the base station of the primary cell sends, to the base station of the secondary cell, the downlink data to be sent to the user equipment, and sends configuration information of an uplink control channel of the secondary cell to the user equipment, so that the user equipment can directly determine which secondary cell to camp on and activate the secondary cell, and the base station of the secondary cell can also determine to activate the secondary cell, which reduces time and signaling interworking in a process of activating the secondary cell. Further, in this embodiment, activation of the secondary cell does not require sending an activation instruction by the base station of the primary cell to the secondary cell, so that resources consumed in the prior art when the base station of the primary cell frequently sends activation instructions to secondary cells when the user equipment moves between the secondary cells can be reduced.

Referring to FIG. 13b, in a specific embodiment, the base station of the secondary cell does not determine, by itself, to activate the secondary cell. Instead, the user equipment needs to determine to activate the secondary cell, so as to avoid resource waste caused because the base station of the secondary cell forwards the downlink data even if the user equipment is actually not within the secondary cell. In this embodiment, after performing step 201, the base station of the secondary cell further includes steps 204 and 205. Specifically:
Step 204: Receive a Media Access Control control element MAC CE sent by the user equipment on an uplink control channel, and determine to activate the secondary cell, where configuration information of the uplink control channel is sent by the base station of the primary cell to the user equipment, so that the user equipment can directly send the MAC CE according to the configuration information.

It may be understood that, the MAC CE sent by the user equipment may include an SR, an SRS, a CQI, a BSR, and the like. When receiving any information in the MAC CE, the base station of the secondary cell determines to activate the secondary cell.

Step 205: Send notification information to the base station of the primary cell, where the notification information is used to indicate that the user equipment falls within the secondary cell, so that the base station of the primary cell may stop sending the downlink data for the user equipment to a base station of another secondary cell, thereby saving system resources.

It should be noted that, there is no absolute sequence relationship between the foregoing step 205, and steps 202 and 203, which may be performed concurrently or may be performed in sequence, and FIG. 13b shows only a specific implementation manner.

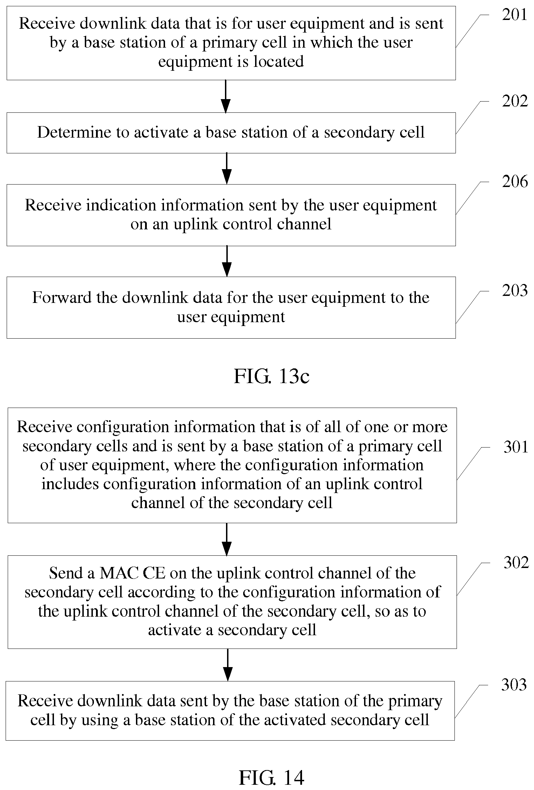

Referring to FIG. 13c, in another specific embodiment, before performing the foregoing step 203, the base station of the secondary cell may further perform step 206.

Step 206: Receive resource configuration information that is for forwarding the downlink data by the base station of the secondary cell and is sent by the base station of the primary cell.

It may be understood that, when sending the downlink data to base stations of multiple secondary cells, the base station of the primary cell may also send the foregoing resource configuration information to the base stations of the secondary cells, so that the base stations of the multiple secondary cells can perform MBSFN transmission. Specifically, in this embodiment, when performing the foregoing step 203, the base station of the secondary cell may send same downlink data synchronously with a base station of other one or more secondary cells to the user equipment on a resource corresponding to the resource configuration information. In this way, for the user equipment, it is equivalent that the received downlink data is sent from one signal source, and strength of a received signal is enhanced.

### Method embodiment 3 of the present invention

A secondary cell activation method is provided, and may be mainly applied to the communications system shown in FIG. 1. The method in this embodiment is a method executed by user equipment. A flowchart is shown in FIG. 14, and the method includes the following steps:
Step 301: Receive configuration information that is of all of one or more secondary cells and is sent by a base station of a primary cell of the user equipment, where the configuration information includes configuration information, such as resource information, of an uplink control channel of the secondary cell, and may further include delay information, where the delay information is information used for performing synchronization between the user equipment and a base station of a secondary cell; configuration information of uplink control channels of all the secondary cells is the same or different; and/or the configuration information of the uplink control channels of all the secondary cells and configuration information of an uplink control channel of the primary cell are the same or different.
Step 302: Send a Media Access Control control element, that is, a MAC CE, on the uplink control channel of the secondary cell according to the foregoing configuration information of the uplink control channel of the secondary cell to activate the secondary cell, and mainly, send the MAC CE, such as a CQI, an SR, an SRS, and a BSR, on a corresponding resource according to the resource information of the uplink control channel of the secondary cell, so that the secondary cell performs resource scheduling, mainly uplink resource scheduling, according to the MAC CE sent by the user equipment.

It may be understood that, the user equipment determines a secondary cell with best signal quality as an activated secondary cell, and sends the MAC CE on an uplink control channel of the determined activated secondary cell; or when receiving a secondary cell list sent by the base station of the primary cell, the user equipment determines a secondary cell that appears first (or the n^{th}) in the secondary cell list as an activated secondary cell, and sends the MAC CE on an uplink control channel of the determined activated secondary cell.

Step 303: Receive downlink data sent by the base station of the primary cell by using a base station of the activated secondary cell.

It may be understood that, the base station of the primary cell may send the configuration information and the downlink data for the user equipment according to the method described in the foregoing method embodiment 1, and details are not described herein. In addition, there is no absolute sequence relationship between the foregoing steps 302 and 303, which may be performed concurrently or may be performed in sequence, and FIG. 14 shows only a specific implementation manner.

It should be noted that, in a specific embodiment, before performing the foregoing step 303, the user equipment may further send signal indication information of the secondary cell to the base station of the primary cell, where the signal indication information is used to indicate signal quality information of the secondary cell, and the user equipment may specifically obtain the signal indication information according to quality information of a signal received from the secondary cell. When receiving the signal indication information, the base station of the primary cell may send the downlink data for the user equipment to a base station of a secondary cell with relatively good signal quality for forwarding, and the base station of the primary cell may not send the downlink data for the user equipment to base stations of all the secondary cells, thereby saving system resources. When performing the foregoing step 303, the user equipment specifically receives the downlink data sent by a base station of a secondary cell determined by the base station of the primary cell according to the signal indication information.

Further, the user equipment may send the foregoing signal indication information before the foregoing step 302, so that when performing step 302, the user equipment may specifically determine a secondary cell with best signal quality indicated by the signal indication information as the activated secondary cell, and send the foregoing MAC CE on the uplink control channel of the determined activated secondary cell.

In the secondary cell activation method in this embodiment of the present invention, a base station of a primary cell only needs to send configuration information of a secondary cell to user equipment, where the configuration information includes configuration information of an uplink control channel of the secondary cell; and send downlink data for the user equipment to a base station of the secondary cell, so that the base station of the secondary cell forwards the downlink data to the user equipment. In this way, the base station of the primary cell does not need to determine, according to a measurement report reported by the user equipment, a secondary cell that needs to be activated and then activate the secondary cell, but directly sends necessary information for communication of the user equipment in the secondary cell, that is, the foregoing configuration information of the uplink control channel of the secondary cell, and the downlink data to the user equipment, so that the user equipment can directly determine which secondary cell to camp on and activate the secondary cell, which reduces time and signaling interworking in a process of activating the secondary cell.

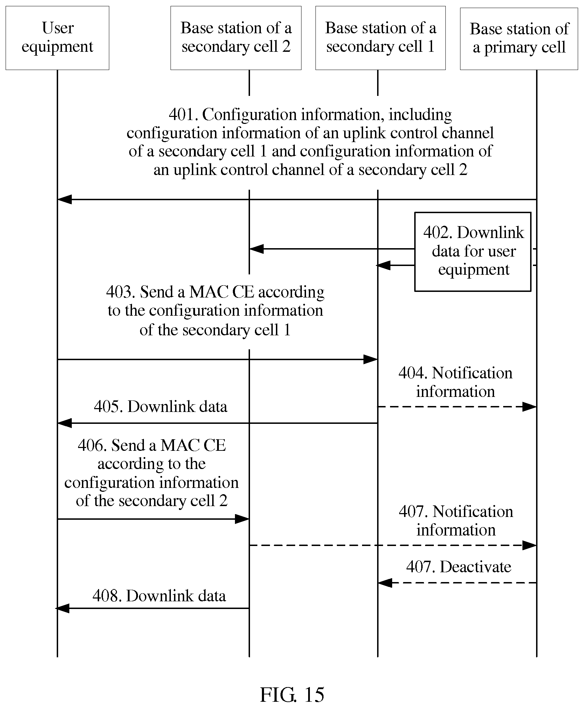

The following method embodiments 4 to 6 describe the secondary cell activation method in the present invention by using a specific application example, where a base station of a secondary cell 1 and a base station of a secondary cell 2 are within a coverage area of a base station in which user equipment is located. Specifically:
Referring to FIG. 15, a secondary cell activation method provided in method embodiment 4 of the present invention includes the following steps:
Step 401: After user equipment establishes a communication connection in a base station of a primary cell, the base station of the primary cell in which the user equipment is located may use all cells within a coverage area of the base station of the primary cell as secondary cells, and send configuration information of these secondary cells to the user equipment by using an RRC connection reconfiguration message, where the configuration information of each secondary cell includes configuration information of an uplink control channel of the secondary cell, and because the RRC connection reconfiguration message includes information about a list of these secondary cells, after receiving the RRC connection reconfiguration message, the user equipment may activate a secondary cell in the list by default.

In another specific embodiment, the base station of the primary cell may not use all the cells within the coverage area of the base station of the primary cell as the secondary cells, but needs to determine the secondary cells according to a measurement report previously reported in the base station of the primary cell by the user equipment. The measurement report may include position information of the user equipment, and the like, so that the base station of the primary cell may use some cells relatively close to the user equipment as the secondary cells.

In addition, when sending the configuration information, the base station of the primary cell may add the configuration information that is of the uplink control channel of the secondary cell and is in the configuration information, and other configuration information into the RRC connection reconfiguration message, and send the RRC connection reconfiguration message to the user equipment; or in another embodiment, may add the foregoing other configuration information and the configuration information of the uplink control channel of the secondary cell into different RRC messages, and send the RRC messages to the user equipment, which is not limited herein. Configuration information of uplink control channels of all the secondary cells may be the same (which is mainly that resource information of the uplink control channels is the same), or may be different. In addition, it may be agreed that the configuration information of the uplink control channel of the secondary cell and configuration information of an uplink control channel of the primary cell are completely the same. In this way, after the uplink control channel of the primary cell is configured, it may be not required to independently reconfigure the uplink control channel of the secondary cell. Alternatively, it may be agreed that the configuration information of the uplink control channel of the secondary cell and configuration information of an uplink control channel of the primary cell are partly the same; for example, time-domain positions are the same. In this way, after the uplink control channel of the primary cell is configured, it may be not required to independently reconfigure a part that is in the uplink control channel of the secondary cell and is the same as information about the primary cell.

Step 402: The base station of the primary cell sends downlink data for the user equipment to base stations of all the secondary cells.

Step 403: The user equipment discovers that the user equipment enters a secondary cell 1, that is, a signal sent by a base station of the secondary cell 1 is relatively strong, acquires a physical cell identifier (physical-layer Cell identity, PCI) of the secondary cell 1, and obtains configuration information of an uplink control channel of the secondary cell 1 according to the physical cell identifier and the configuration information received by the user equipment in the foregoing step 401.

The user equipment sends a MAC CE, which includes information such as a CQI and an SRS, on the corresponding uplink control channel according to the configuration information of the uplink control channel of the secondary cell 1; and may further send a scheduling request (scheduling request, SR) and the like on the corresponding uplink control channel to activate the secondary cell 1.

Step 404: The base station of the secondary cell 1 sends notification information to the base station of the primary cell, where the notification information is used to indicate that the user equipment falls within the secondary cell 1, so that after receiving the notification information, the base station of the primary cell may stop sending the downlink data for the user equipment to a base station of a secondary cell except the secondary cell 1.

Step 405: After receiving a MAC CE sent by the user equipment, the base station of the secondary cell 1 performs resource scheduling for the user equipment according to the MAC CE, which mainly includes uplink resource scheduling; and after determining that the secondary cell 1 is activated, the base station of the secondary cell 1 may forward the downlink data received in the foregoing step 402 to the user equipment.

Step 406: When entering another secondary cell 2, the user equipment may obtain configuration information of an uplink control channel of the secondary cell 2 according to a PCI of the secondary cell 2 and the configuration information received by the user equipment in the foregoing step 401; and the user equipment sends a MAC CE on the corresponding uplink control channel according to the configuration information of the uplink control channel of the secondary cell 2 to activate the secondary cell 2.

Step 407: A base station of the secondary cell 2 sends notification information to the base station of the primary cell, where the notification information is used to indicate that the user equipment falls within the secondary cell 2, so that after receiving the notification information, the base station of the primary cell may stop sending the downlink data for the user equipment to a base station of a secondary cell except the secondary cell 2, and may further deactivate the foregoing secondary cell 1.

Step 408: After receiving the MAC CE sent by the user equipment, the base station of the secondary cell 2 performs resource scheduling for the user equipment according to the MAC CE, which mainly includes uplink resource scheduling and the like; and after determining that the secondary cell 2 is activated, the base station of the secondary cell 2 may forward the downlink data received in the foregoing step 402 to the user equipment.

It should be noted that, steps 404 and 407 in the foregoing embodiment may be optional steps, and a dashed-line arrow in FIG. 15 represents that this step is not a necessary step, that is, the base station of the primary cell may not consider which secondary cell is activated. However, in another specific embodiment, before the foregoing step 402, the base station of the primary cell may further activate at least one secondary cell in all the secondary cells, that is, send an activation instruction to the at least one secondary cell, so that when performing the foregoing step 402, the base station of the primary cell may send the downlink data for the user equipment only to base stations of these activated secondary cells. In this case, because the base station of the primary cell does not send the downlink data for the user equipment to the base stations of all the secondary cells when sending the downlink data for the user equipment, the foregoing step 404 of sending the notification information is a necessary step, and it is necessary to instruct the base station of the primary cell to send the downlink data to a base station of a secondary cell as required.

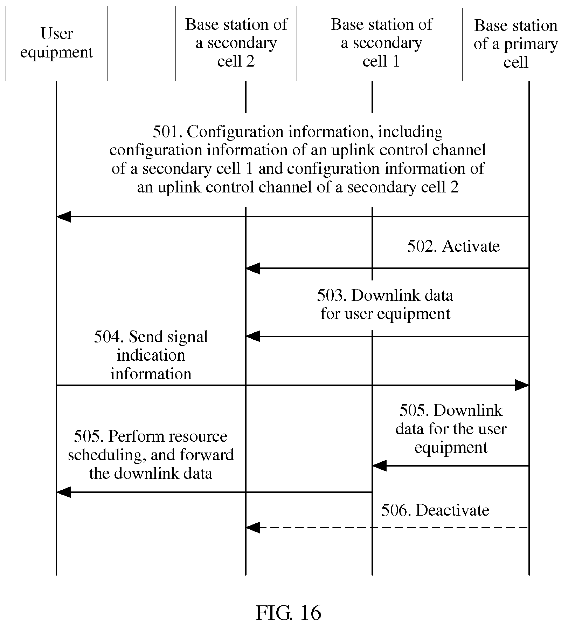

Referring to FIG. 16, a secondary cell activation method provided in method embodiment 5 of the present invention includes the following steps:
Step 501: A base station of a primary cell in which user equipment is located may use all cells within a coverage area of the base station of the primary cell as secondary cells, and sends configuration information of these secondary cells to the user equipment by using an RRC connection reconfiguration message, where the configuration information of each secondary cell includes configuration information of an uplink control channel of the secondary cell.

In another specific embodiment, the base station of the primary cell may not use all the cells within the coverage area of the base station of the primary cell as the secondary cells, but needs to determine the secondary cells according to a measurement report previously reported in the base station of the primary cell by the user equipment. The measurement report may include position information of the user equipment, and the like, so that the base station of the primary cell may use some cells relatively close to the user equipment as the secondary cells.

In addition, when sending the configuration information, the base station of the primary cell may add the configuration information that is of the uplink control channel of the secondary cell and is in the configuration information, and other configuration information into the RRC connection reconfiguration message, and send the RRC connection reconfiguration message to the user equipment; or in another embodiment, may add the foregoing other configuration information and the configuration information of the uplink control channel of the secondary cell into different RRC messages, and send the RRC messages to the user equipment, which is not limited herein. Configuration information of uplink control channels of all the secondary cells may be the same (which is mainly that resource information of the uplink control channels is the same), or may be different. In addition, it may be agreed that the configuration information of the uplink control channel of the secondary cell and configuration information of an uplink control channel of the primary cell are completely the same. In this way, after the uplink control channel of the primary cell is configured, it may be not required to independently reconfigure the uplink control channel of the secondary cell. Alternatively, it may be agreed that the configuration information of the uplink control channel of the secondary cell and configuration information of an uplink control channel of the primary cell are partly the same; for example, time-domain positions are the same. In this way, after the uplink control channel of the primary cell is configured, it may be not required to independently reconfigure a part that is in the uplink control channel of the secondary cell and is the same as information about the primary cell.

Step 502: The base station of the primary cell activates a secondary cell 2 in advance, that is, the base station of the primary cell delivers an activation instruction to a base station of the secondary cell 2 to activate the secondary cell 2.

Step 503: The base station of the primary cell sends downlink data for the user equipment to the base station of the activated secondary cell 2.

Step 504: The user equipment discovers that the user equipment enters a secondary cell 1, that is, a signal sent by a base station of the secondary cell 1 is relatively strong, and sends signal indication information to the base station of the primary cell to indicate that the secondary cell 1 has relatively good signal quality, where specifically, the signal indication information may be carried in a scheduling request (scheduling request, SR) or another message and sent to the base station of the primary cell.

Step 505: The base station of the primary cell stops sending the downlink data for the user equipment to the base station of the secondary cell 2, and sends the downlink data for the user equipment to the base station of the secondary cell 1; and after receiving the downlink data, the base station of the secondary cell 1 performs resource scheduling for the user equipment and then forwards the downlink data to the user equipment.

In specific implementation, before sending the downlink data to the base station of the secondary cell 1, the base station of the primary cell may further first activate the secondary cell 1, and may further instruct the user equipment to activate the secondary cell 1; and then sends the downlink data for the user equipment to the base station of the secondary cell 1. The user equipment may send a MAC CE on the corresponding uplink control channel according to the configuration information that is of an uplink control channel of the secondary cell 1 and is received in step 501.

Step 506: To reduce system resources, the base station of the primary cell may further deactivate the previous secondary cell 2, that is, send a deactivation instruction to the base station of the secondary cell 2 to deactivate the secondary cell 2, where a dashed-line arrow in FIG. 16 represents that this step is an optional step.

It should be noted that, it may be not required to independently send the activation instruction to the base station of the secondary cell 2 in the foregoing step 502. Instead, in a process of performing step 501, information about a secondary cell list is included in the RRC connection reconfiguration message, and it is agreed that a secondary cell in the list may be activated by default after the user equipment receives the RRC connection reconfiguration message.

In addition, it should be noted that, in another specific embodiment, when the configuration information of each secondary cell is sent to the user equipment in the foregoing step 501, it may be not required to send the configuration information of the uplink control channels of all the secondary cells to the user equipment. Instead, in the foregoing step 505 or step 502, a secondary cell that needs to be activated is determined, and configuration information of an uplink control channel of the secondary cell that needs to be activated is sent to the user equipment. In this way, it may be not required to send the configuration information of the uplink control channels of all the secondary cells, thereby saving system resources.

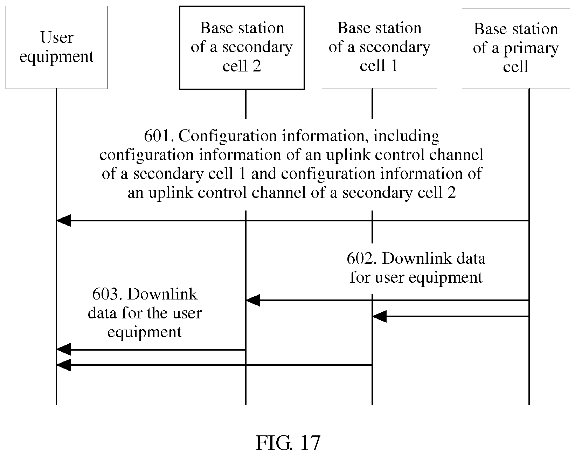

Referring to FIG. 17, a secondary cell activation method provided in method embodiment 6 of the present invention includes the following steps:
Step 601: A base station of a primary cell in which user equipment is located may use all cells within a coverage area of the base station of the primary cell as secondary cells, and sends configuration information of these secondary cells to the user equipment by using an RRC connection reconfiguration message, where the configuration information of each secondary cell includes configuration information of an uplink control channel of the secondary cell.
Step 602: The base station of the primary cell sends downlink data for the user equipment to base stations of all the secondary cells.
Step 603: Regardless of whether the user equipment falls within the secondary cells, the base stations of all the secondary cells perform resource scheduling for the user equipment, and forward the downlink data to the user equipment.

Further, when sending the downlink data to the base stations of all the secondary cells, the base station of the primary cell may further send, to the base stations of all the secondary cells, resource configuration information for forwarding the downlink data by all the secondary cells; and then the base stations of these secondary cells may synchronously send same downlink data to the user equipment according to the resource configuration information.

A person of ordinary skill in the art may understand that all or a part of the steps of the methods in the embodiments may be implemented by a program instructing relevant hardware. The program may be stored in a computer readable storage medium. The storage medium may include: a ROM, a RAM, a magnetic disk, or an optical disc.

A secondary cell activation method and apparatus, a communications system, a base station, and user equipment that are provided in the embodiments of the present invention have been described in detail in the foregoing. Specific examples are used herein to describe the principle and implementation manners of the present invention, and the description of the foregoing embodiments is only intended to help understand the method and core idea of the present invention. Meanwhile, an ordinary person skilled in the art can make variations to specific implementation manners and the application scope. In conclusion, the content of this specification should not be understood as a limitation on the present invention.

## Claims

1. A secondary cell activation apparatus of a user equipment, UE, comprising:
a configuration receiving unit (30), configured to receive configuration information of each secondary cell of all of one or more secondary cells sent by a base station of a primary cell of the user equipment, wherein the configuration information of each secondary cell comprises configuration information of an uplink control channel of said secondary cell;
an information sending unit (31), configured to, in order to activate the secondary cell in which the user equipment is currently located, directly send a Media Access Control control element MAC CE on the uplink control channel of the secondary cell according to the configuration information that is of the uplink control channel of the secondary cell and which is received by the configuration receiving unit; and
a data receiving unit (32), configured to receive downlink data sent by the base station of the primary cell by using a base station of the activated secondary cell;
wherein
the information sending unit (31) is further configured to: determine a secondary cell with best signal quality as an activated secondary cell, and send the MAC CE on an uplink control channel of the determined activated secondary cell; or
the information sending unit (31) is further configured to: when a secondary cell list sent by the base station of the primary cell is received, determine a secondary cell that appears first in the secondary cell list as an activated secondary cell, and send the MAC CE on an uplink control channel of the determined activated secondary cell.

2. A secondary cell activation method of a user equipment, UE, comprising:
receiving configuration information of each secondary cell of all of one or more secondary cells which is sent by a base station of a primary cell of the user equipment, wherein the configuration information of each secondary cell comprises configuration information of an uplink control channel of said secondary cell;
directly sending a Media Access Control control element MAC CE on the uplink control channel of the secondary cell according to the configuration information of the uplink control channel of the secondary cell, so as to activate the secondary cell in which the user equipment is currently located; and
receiving downlink data sent by the base station of the primary cell by using a base station of the activated secondary cell;
wherein before the sending a Media Access Control control element MAC CE on the uplink control channel of the secondary cell of the user equipment, so as to activate the secondary cell, the method further comprises:
determining a secondary cell with best signal quality as an activated secondary cell, and sending the MAC CE on an uplink control channel of the determined activated secondary cell; or
when a secondary cell list sent by the base station of the primary cell is received, determining a secondary cell that appears first in the secondary cell list as an activated secondary cell, and sending the MAC CE on an uplink control channel of the determined activated secondary cell; or
sending signal indication information of the secondary cell to the base station of the primary cell, wherein the signal indication information is used to indicate signal quality information of the secondary cell; determining a secondary cell with best signal quality indicated by the signal indication information as an activated secondary cell; and sending the MAC CE on an uplink control channel of the determined activated secondary cell.

3. The method according to claim 2, wherein
configuration information of uplink control channels of all the secondary cells is the same and the configuration information of the uplink control channels of all the secondary cells and configuration information of an uplink control channel of the primary cell are the same;
or
configuration information of uplink control channels of all the secondary cells is different and the configuration information of the uplink control channels of all the secondary cells and configuration information of an uplink control channel of the primary cell are different.

## Patentansprüche

1. Vorrichtung zur Aktivierung einer Sekundärzelle eines Benutzergeräts (User Equipment, UE), umfassend:
eine Konfigurationsempfangseinheit (30), die konfiguriert ist, um eine Konfigurationsinformation jeder Sekundärzelle von einer oder mehreren Sekundärzellen zu empfangen, die von einer Basisstation einer Primärzelle des Benutzergeräts gesendet werden, wobei die Konfigurationsinformation jeder Sekundärzelle die Konfigurationsinformation eines Uplink-Steuerkanals der Sekundärzelle umfasst;
eine Informationssendeeinheit (31), die konfiguriert ist, um zur Aktivierung der Sekundärzelle, in der sich das Benutzergerät aktuell befindet, ein Medienzugriffssteuerelement (Media Access Control Element, MAC-CE) direkt auf dem Uplink-Steuerkanal der Sekundärzelle gemäß der Konfigurationsinformation, die von dem Uplink-Steuerkanal der Sekundärzelle stammt und die von der Konfigurationsempfangseinheit empfangen wird, zu senden; und
eine Datenempfangseinheit (32), die konfiguriert ist, um Downlink-Daten zu empfangen, die von der Basisstation der Primärzelle unter Verwendung einer Basisstation der aktivierten Sekundärzelle gesendet werden;
wobei die Informationssendeeinheit (31) ferner konfiguriert ist, um: eine Sekundärzelle mit bester Signalqualität als aktivierte Sekundärzelle zu bestimmen und das MAC-CE auf einem Uplink-Steuerkanal der bestimmten aktivierten Sekundärzelle zu senden; oder
die Informationssendeeinheit (31) ferner konfiguriert ist, um: wenn eine von der Basisstation der Primärzelle gesendete Sekundärzellenliste empfangen wird, eine Sekundärzelle, die in der Sekundärzellenliste zuerst erscheint, als eine aktivierte Sekundärzelle zu bestimmen und das MAC-CE auf einem Uplink-Steuerkanal der bestimmten aktivierten Sekundärzelle zu senden.

2. Verfahren zur Aktivierung einer Sekundärzelle eines Benutzergeräts (UE), umfassend:
Empfangen einer Konfigurationsinformation jeder Sekundärzelle von einer oder mehreren Sekundärzellen, die von einer Basisstation einer Primärzelle des Benutzergeräts gesendet werden, wobei die Konfigurationsinformation jeder Sekundärzelle die Konfigurationsinformation eines Uplink-Steuerkanals der Sekundärzelle umfasst;
direktes Senden eines Medienzugriffssteuerelements (MAC-CE) auf dem Uplink-Steuerkanal der Sekundärzelle gemäß der Konfigurationsinformation des Uplink-Steuerkanals der Sekundärzelle, um so die Sekundärzelle zu aktivieren, in der sich das Benutzergerät aktuell befindet; und
Empfangen der Downlink-Daten, die von der Basisstation der Primärzelle unter Verwendung einer Basisstation der aktivierten Sekundärzelle gesendet werden;
wobei vor dem Senden eines Medienzugriffssteuerelements (MAC-CE) auf dem Uplink-Steuerkanal der Sekundärzelle des Benutzergeräts, um so die Sekundärzelle zu aktivieren, das Verfahren ferner umfasst:
Bestimmen einer Sekundärzelle mit bester Signalqualität als aktivierte Sekundärzelle und Senden des MAC-CE auf einem Uplink-Steuerkanal der bestimmten aktivierten Sekundärzelle; oder
wenn eine von der Basisstation der Primärzelle gesendete Sekundärzellenliste empfangen wird, Bestimmen einer Sekundärzelle, die in der Sekundärzellenliste zuerst erscheint, als eine aktivierte Sekundärzelle und Senden des MAC-CE auf einem Uplink-Steuerkanal der bestimmten aktivierten Sekundärzelle; oder
Senden einer Signalanzeigeinformation der Sekundärzelle an die Basisstation der Primärzelle, wobei die Signalanzeigeinformation verwendet wird, um eine Signalqualitätsinformation der Sekundärzelle anzuzeigen; Bestimmen einer Sekundärzelle mit der besten Signalqualität, die durch die Signalanzeigeinformation angegeben wird, als aktivierte Sekundärzelle; und Senden des MAC-CE auf einem Uplink-Steuerkanal der bestimmten aktivierten Sekundärzelle.

3. Verfahren nach Anspruch 2, wobei
die Konfigurationsinformation der Uplink-Steuerkanäle aller Sekundärzellen identisch ist und die Konfigurationsinformation der Uplink-Steuerkanäle aller Sekundärzellen und die Konfigurationsinformation eines Uplink-Steuerkanals der Primärzelle identisch ist; oder
die Konfigurationsinformation der Uplink-Steuerkanäle aller Sekundärzellen verschieden ist und die Konfigurationsinformation der Uplink-Steuerkanäle aller Sekundärzellen und die Konfigurationsinformation eines Uplink-Steuerkanals der Primärzelle verschieden ist.

## Revendications

1. Appareil d'activation de cellule secondaire d'un équipement d'utilisateur, UE, comprenant :
une unité de réception de configuration (30), configurée pour recevoir des informations de configuration de chaque cellule secondaire de la totalité d'une ou plusieurs cellules secondaires envoyées par une station de base d'une cellule primaire de l'équipement d'utilisateur, les informations de configuration de chaque cellule secondaire contenant des informations de configuration d'un canal de commande de liaison montante de ladite cellule secondaire ;
une unité d'envoi d'informations (31), configurée pour, afin d'activer la cellule secondaire dans laquelle l'équipement d'utilisateur est actuellement situé, envoyer directement un élément de commande de contrôle d'accès au support, MAC CE, sur le canal de commande de liaison montante de la cellule secondaire en fonction des informations de configuration qui sont celles du canal de commande de liaison montante de la cellule secondaire et qui sont reçues par l'unité de réception de configuration ; et
une unité de réception de données (32), configurée pour recevoir des données de liaison descendante envoyées par la station de base de la cellule primaire en utilisant une station de base de la cellule secondaire activée ;
dans lequel
l'unité d'envoi d'informations (31) est configurée en outre pour: déterminer une cellule secondaire ayant la meilleure qualité de signal comme cellule secondaire activée, et envoyer le MAC CE sur un canal de commande de liaison montante de la cellule secondaire activée déterminée ; ou
l'unité d'envoi d'informations (31) est également configurée pour : lorsqu'une liste de cellules secondaires envoyée par la station de base de la cellule primaire est reçue, déterminer une cellule secondaire qui figure en première place dans la liste de cellules secondaires comme cellule secondaire activée, et envoyer le MAC CE sur un canal de commande de liaison montante de la cellule secondaire activée déterminée.

2. Procédé d'activation de cellule secondaire d'un équipement d'utilisateur, UE, comprenant les étapes consistant à :
recevoir des informations de configuration de chaque cellule secondaire de la totalité d'une ou plusieurs cellules secondaires qui sont envoyées par une station de base d'une cellule primaire de l'équipement d'utilisateur, les informations de configuration de chaque cellule secondaire contenant des informations de configuration d'un canal de commande de liaison montante de ladite cellule secondaire ;
envoyer directement un élément de commande de contrôle d'accès au support, MAC CE, sur le canal de commande de liaison montante de la cellule secondaire en fonction des informations de configuration du canal de commande de liaison montante de la cellule secondaire, afin d'activer la cellule secondaire dans laquelle l'équipement d'utilisateur est actuellement situé ; et
recevoir des données de liaison descendante envoyées par la station de base de la cellule primaire en utilisant une station de base de la cellule secondaire activée ;
le procédé, avant l'envoi d'un élément de commande de contrôle d'accès au support, MAC CE, sur le canal de commande de liaison montante de la cellule secondaire de l'équipement d'utilisateur, afin d'activer la cellule secondaire, comprenant également les étapes consistant à :
déterminer une cellule secondaire ayant la meilleure qualité de signal comme cellule secondaire activée, et envoyer le MAC CE sur un canal de commande de liaison montante de la cellule secondaire activée déterminée ; ou
lorsqu'une liste de cellules secondaires envoyée par la station de base de la cellule primaire est reçue, déterminer une cellule secondaire qui figure en première place dans la liste de cellules secondaires comme cellule secondaire activée, et envoyer le MAC CE sur un canal de commande de liaison montante de la cellule secondaire activée ainsi déterminée ; ou
envoyer des informations d'indication de signal de la cellule secondaire à la station de base de la cellule primaire, les informations d'indication de signal servant à indiquer des informations de qualité de signal de la cellule secondaire ; déterminer une cellule secondaire ayant la meilleure qualité de signal indiquée par les informations d'indication de signal comme cellule secondaire activée ; et envoyer le MAC CE sur un canal de commande de liaison montante de la cellule secondaire activée ainsi déterminée.

3. Procédé selon la revendication 2, dans lequel
les informations de configuration des canaux de commande de liaison montante de chacune des cellules secondaires sont identiques et les informations de configuration des canaux de commande de liaison montante de chacune des cellules secondaires et les informations de configuration d'un canal de commande de liaison montante de la cellule primaire sont identiques ;
ou
les informations de configuration des canaux de commande de liaison montante de chacune des cellules secondaires sont différentes et les informations de configuration des canaux de commande de liaison montante de chacune des cellules secondaires et les informations de configuration d'un canal de commande de liaison montante de la cellule primaire sont différentes.
